# EUROPEAN PATENT SPECIFICATION

(11) **EP 2 326 169 B1**
(45) Date of publication and mention of the grant of the patent: **27.07.2016**
(21) Application number: 08758826.5
(22) Date of filing: 28.05.2008
(51) Int. Cl.: A01N 25/04, A01N 47/36, A01N 43/40, A01N 43/60, A01N 57/20, A01N 39/04, A01N 37/10, A01N 43/90, A01N 47/30, A01N 37/40, A01N 39/02, A01N 37/48, A01N 43/653, A01N 41/10, A01N 43/80

(54) **SUSPENSION CONCENTRATES IN OIL OF SULFONYLUREAS AND COMBINATIONS WITH FLUROXYPYR OR OTHER AGROCHEMICALS**
ÖLSUSPENSIONSKONZENTRATE VON SULFONYLHARNSTOFFEN UND KOMBINATIONEN MIT FLUOROXYPYR ODER ANDEREN AGRARCHEMIKALIEN
SUSPENSIONS CONCENTREES DANS DE L'HUILE DE SULFONYLUREES ET COMBINAISONS AVEC DU FLUROXYPYR OU D'AUTRES PRODUITS AGROCHIMIQUES

(43) Date of publication of application: 01.06.2011
(73) Proprietor: GAT Microencapsulation GmbH, 2490 Ebenfurth (AT)
(72) Inventor: CASAÑA GINER, Victor, 2490 Ebenfurth (AT); GIMENO SIERRA, Bárbara, 2490 Ebenfurth (AT); GIMENO SIERRA, Miguel, 2490 Ebenfurth (AT)
(74) Representative: Soler Lerma, Santiago
(86) International application number: PCT/EP2008/004242
(87) International publication number: WO 2009/152827

(56) References cited:
- WO-A1-00/25586
- WO-A1-01/17346
- WO-A1-01/30156
- WO-A2-2007/031251

## Description

### Field of the Invention

Herbicidal formulations containing Sulfonylureas in crystal form as suspension in oil or oil dispersion system, in particular suspension concentrates ("SC" or "SCs") and suspoemulsions ("SE" or "SEs") when combined with other agrochemicals, and process of manufacture thereof.

### Background

Sulfonylureas (we will use as identical word "sulfonamides" through this text or also referred as "SUs" or equally "SU") are another class of herbicides with different biological activity than Fluroxypyr and also different biochemistry, characterized by the structure 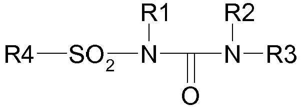 that links directly or indirectly two (substituted) aromatic and/or (substituted) heterocyclic rings.

They are basically aminoacid synthesis inhibitors (of the acetolactate synthase), most of them preventing synthesis of valine and isoleucine and affecting to cell division and growth. In some cases (like for nicosulfuron) the selectivity in some crops -maize- derives from P450 pyrimidine 5-hydroxylation and glycosilation. They are absorbed by leaves and roots with translocation throughout the plant, specially to meristems. Normally they do not avoid germination, but further development is severely affected by the target weeds.

They are commercially present in the form of lower alkyl ethers and esters of the phenyl or heterocyclic nucleus. In the present invention, the term sulfonylurea comprises the underivatized molecules as well the aforementioned esters and ethers (e.g., by Thifensulfuron, we refer at the same time to Thifensulfuron-methyl or to any corresponding known active forms of such SUs isomers).

Absorption through roots is limited to the extent that the SUs are not very stable (not even in the packaged form ready to buy) in particular in soil conditions. Thus, most of the absorption is done by the aerial parts, more specifically by the leaves. In order to achieve appropriate absorption of the SUs by the plants different approaches have been taken. WO 01/30156 A1 discloses (see abstract and p.4, 1. 1-24, p. 28, 1. 14-20, and suspension concentrate 3 of Table 1 in p. 31) stable non- aqueous suspension concentrates containing a) a herbicidal sulfonylurea in suspended form; b) one or more active substances that are partially or completely dissolved in the component c); c) an organic solvent or solvent mixture; d) one or more non-ionic emulsifiers; e) optionally one or more ionic emulsifiers; and f) optionally one or more thickening agents or thixotropic agents.

US 6,482,772 claims the use of alkylpolyglycosides at 1-50% wt.-% (through this text, % will be referred to weight percent) for a wide group of SUs. EP 313317 and EP 554015 address the use of vegetable oils as the only needed technical feature that improves formulations of SUs over their prior art, similar to JP 63/023806. Epoxydized natural oils for SUs are claimed in JP 08/104603. Some commercial solutions to improve the absorption (and maintain the stability of the SU) are based in double-packs composed of a separated package with the appropriate adjuvants that are to be mixed in the spray tank separately from the "basic SU-containing package", referred as "tank-mix" formulations. This solution is obviously not preferred for industrial and economical reasons. Such secondary packages contain highly concentrated wetters as lower alcohols, tallow amine ethoxylated, ethoxylated alcohols or phenols, tallow amines, etc.

It is one object of the invention to provide a suspension concentrate of SUs that has already incorporated all the necessary coformulants for an appropriate herbicidal activity, the formulation is physicochemically stable, it has good emulsion/dispersion properties and the SU molecule itself is also stable in the customary test of accelerated stability (2 weeks at 54 °C), usually representative of the shelf stability for 2 years.

Fluroxypyr, with CAS# [69377-81-7] and IUPAC name 4-amino-3,5-dichloro-6fluoro-2-pyridinyl)oxy]acetic acid, is a representative herbicide that has auxin activity and mimics indolylacetic acid. Fluroxypyr is used normally in the form of ester, although the herbicide activity is attributed at molecular level to the free acid form. Preferably the Fluroxypyr derivatives are 2-butoxy-1-methylethyl ester with CAS# [154486-27-8], 1-methylheptyl ester (also designated as "meptyl" with CAS# [81406-37-3]. Like in the case of the SUs, the present invention applies to any active form (isomer) of Fluroxypyr, since when the derivatives are oil soluble in oil, they are prepared as SE, and if they are oil-insoluble (e.g. salts) they can be supended in the oil (SC) mixed with the SUs, this proviso applicable to all active ingredients mentioned herein.

One of the first disclosures of Fluroxypyr as one embodiment of a Markush formula was done in US 1971-166257 and US 1973-342783 (McGregor et al, Dow Chemical Co., 1971), although in the e-pesticide reference manual, (BCPC, 2003, ISBN 1-901396-34-7) other reference as late as 1983 appears as first public disclosure. Such US documents describe the activity of pyridyloxyacetic acid derivatives useful as postemergence herbicide (against barnyard grass) and pigweed; also as preemergence herbicide against cocklebur.

The problem of finding suitable wetters, suspending agents, etc. is also similar for the case of Fluroxypyr. Commercial formulations of Fluroxypyr, as Starane^{®} (Dow), containing as of 2008 in Europe a needed solvent for absorption under the shadow of withdrawal from the market as is the N-methylpyrrolidone (as cancer suspected agent) -even if this dangerous chemical is still used in many other formulations-, naphtha solvents, and polysorbitan -in between others- surfactants.

Since Fluroxypyr and SUs are chemically and biologically different, and even more importantly physicochemically different (different solubility's properties, vapor pressure, melting point, etc), the formulation of both classes together is evidently a challenge: the main dissiculty is to make a formulation wherein the SUs are stable, do not agglomerate or bleed and at the same time the SE of SU and Fluroxypyr has optimal emulsification properties. The interest of combining both classes of herbicides into a single package has huge advantages to current combinations present already in the market, specially in the field of cereal crops. It is precisely the difficulty into formulate both active ingredients in the same formulation -in such a way that allows a "single package" form- what prevents this combination to be in the market.

Originally the intention of the inventors was to provide a suitable, yet non-existing, suspoemulsions (SEs) of SUs and Fluroxypyr, for control of weeds in cereals. However, the applicability of this invention is surprisingly not only suitable to Fluroxypyr, rather to a variety of herbicides that are soluble in the oil(s) used to suspend the SUs, therefore widening the uses in other crops or against other weeds. Of course this invention may be applied to improve existing formulations of SUs in SC form (oil suspensions or oil dispersion systems). The inventors have positively proven that the advantages of the suspoemulsions disclosed herein are also applicable to herbicides of the group of ureas affecting the photosystem II (Isoproturon) and also hydroxynitriles that moreover inhibit the oxidative phosphorylation (Bromoxynyl, Ioxynyl), diphenylethers with inhibiting activity of protoporphyrinogen oxidase (Lactofen), pyridinecarboxamides with inhibition of phytoene desaturase (Diflufenican), p-hydroxyphenyl pyruvate dioxygenase inhibitors (Mesotrione, Isoxaflutole) and aryloxyphenoxypropionates inhibiting the acetyl CoA carboxylase (Quizalofop-P-ethyl), in between other classes of agrochemicals.

It is deduced that if the combination of SUs with the different herbicide classes in the way proposed in this invention is effective, then any herbicide that is soluble in the oil that suspends the SU(s) is also suitable to benefit of the present invention. It is also obvious that oil soluble ingredients able to be incorporated in the suspoemulsion (for example, herbicides, herbicide's safeners, fungicides, bactericides, insecticides, insect antifeedants, pheromones, acaricides, miticides, nematocides, plant growth regulators and organic or inorganic foliar fertilizers, etc.) benefit as well of the properties of the suspoemulsion disclosed herein.

While each of the mentioned herbicides has its relative "own" needs regarding appropriate emulsifiers or wetters (a wetter is chemically also a surfactant or emulsifier, the latter both terms used as synonyms) this needs may be conciliated appropriately according the present invention, by increasing the quantity of the desired type of emulsifiers present in the final formulation. For example, the known need of the aryloxyphenoxypropionates ("fop" herbicides) of high contents in fatty alcohol alkoxylates (ranging from 10-40 % in the final formulation) may be achieved by increasing this type of surfactant, that on the other hand, is needed for the proper suspension and activity of the SUs according the suspoemulsions of this invention. The skilled in the art shall reduce proportionally the total amount of coformulants (of the examples as first choice) in order to accommodate the needs of any particular agrochemical.

Is thus the first object of the invention to provide a stabilization of non-aqueous suspensions of SUs, in the sense of obtaining a stable suspension, wherein the active ingredient(s) are not flocculated or inhomogeneously distributed with aging. The inventors addressed formulations of SUs in EP-A 1844653 but in the form of water dispersable granules (WG). EP-B 420497 addresses this problem by addition of a watersoluble or water-swellable polymer (e.g. propylenglycol, polyvinylpyrrolidone, polyvinylacetate) and a protic solvent. As mentioned therein, the common method for stabilizing is to add thickeners or suspending agents to increase the viscosity.

We have observed that only with addition of this type of coformulants, the stability of the suspension is compromised with the pourability of the suspension. In other words, if the quantity of suspending agents (as clays, bentonites, smectites, etc.) is increased -in order to avoid bleeding- without attending the particular composition of other surfactants, the stability is not much improved; in order to get a correctly suspended SU, the quantity of clay to be used is so high that the viscosity of the suspension makes the farmer very difficult (or impossible) to empty completely the can with the herbicide, or at least what is required by international FAO/WHO standards. This is addressed as well in our invention, where the pourability problem is also solved.

According to, EP-B 420497, another problem is also relevant for suspensions: the fact that after dilution in water in the spray tanks, the formulation does not agglomerate and do not block the nozzles. The stabilized suspensions of EP-B 420497 do not compromise performance. Such instant suspension concentrates are pourable, disperse into water using minimal or no agitation. The aqueous dispersions obtained by addition of the concentrates to water can be sprayed through conventional spray nozzles in which 50 mesh screens precede each nozzle to protect it from blockage. The dispersions have little tendency to form films in water, which films can also plug nozzle screens: EP-B 420497 solves this problem by addition of water-swellabe polymers, that at the same time are influences by the presence of protic solvents that interact with such water swellable polymers. The logic in this solution is obvious, since such polymers form films avoiding flocculation of the suspended crystals. We have invented a suspension that, even without the presence of such water swellable polymers, does not cause any problems of nozzle blocking, thanks to the very effective presence of a combination of certain surface active (surfactant) ingredients and a thickener, that not only maintain the suspension stable in the presence of the oil, but also in the spray mix. Noteworthy, while the film forming properties of water-swellable polymers are known, and also, their ability to interact with protic solvents, and even is known their capacity of forming a protecting film around the suspended crystals, is unpredictable how these polymers must be selected in order that they work together with the other ingredients of the formulation, since the formulation chemistry is extremely complex. One disadvantage of the prior art approach is that the presence of water may trigger the hydrolysis of the active SUs.

We have adopted a different approach that is based in the stabilization via selection of surfactants, with a much complex chemistry that the known film forming properties of the polymers of EP-B 420497.

The selection of emulsifiers, surfactants, wetters, dispersing agents are object of a few general text books wherein the general principles of surface chemistry is described. Much of the literature on surfactant systems is based in triangle diagrams of mixture of surfactants/solvents (e.g., how hexane is emulsified in water according the variation of two determined surfactants) that are not even able to be exactly described mathematically (since other parameters as temperature are influencing such diagrams). Up to this date, it is impossible to predict, for example, the oil separation that a mixture of a castor oil derivative and a fatty alcohol derivative in a paraffinic oil wherein a US is dispersed: only the experimental trial may answer to this question. The inventiveness to find suitable solutions is not a question of "luck", since the amount of combinations to try in order to find a solution are in the range of billions and more. It is well known in the art which surfactants are available for the skilled in the art, their properties as individual entities, but no formulation chemist would ever dare to suggest that according to *a priori* available information, the selection of the surfactants is something obvious. Lesser, the selection of surfactants that achieve simultaneously the following targets:
i) Contribute to avoid the bleeding and flocculation of a suspended active ingredient, namely, the physicochemical stability of the suspended crystals over the shelf life of a herbicidal formulation
ii) Allow a emulsification of the oil containing the crystals into the water that the farmer will apply in the field, such emulsion being stable and preventing the formation of lumps that would block the nozzles of the sprayers
iii) Comply with the requirements of pourability of such packaged industrial product
iv) Survive a temperature/pressure process of milling without losing their known properties (without change of structure)
v) Act together with other formulation ingredients of very different chemistry
vi) It has an appropriate biological activity, e.g., appropriate surface tension properties for the active ingredient to be properly absorbed through the leaves of the target plant, and no coformulant being phytotoxic.
vii) Further, and special object of the present invention, that such emulsifiers have the ability to make an stable emulsion concentrate of a secondary group of active ingredients not suspended, rather dissolved, in the oil; in fact to achieve an stable suspoemulsion
viii) And such suspoemulsion of vii) that at the same time complies with i) to vi)

These problems are solved by the present invention by means of formulation a suspension concentrate (with the surprising ability to further be the matrix for an additionally emulsified active ingredient soluble in the oil) with these features:
a. at least a herbicidal sulfonylurea
b. an oil or mixture of oils; wherein the sulfonylurea solubility is less than 10 g/kg
c. at least a dispersant soluble in oil of the type non-ionic block copolymer
d. at least a wetter of the type C12-C20 alcohol ethoxylated and/or propoxylated
e. a C6-C18 alkyl benzenesulfonic acid, or alkaline and/or earth alkaline salts thereof
f. at least a suspending agent.

The assumption that in the context of the present invention the selection of the surfactants is "known for the skilled in the art", has no theoretical basis (still the formulation has more of an art than of a science, due its extreme complexity). The skilled in the art is perplexed when having to select surfactants in between hundreds of candidates, with no indication of how an emulsifier would interact with a suspending agent (generally clays or inorganic material) and a suspended SU and an oil and another surfactant in order to solve the problems mentioned above.

It is obvious that the inventors have used industrially available -and not only this, they must be also approved for their use in agriculture- coformulants for the performance of the invention. Therefore, it is not surprising that, when taken individually, the coformulants mentioned in this invention have been cited previously for many other suspension concentrates, or even some of them for SU concentrates, but, what is essential is that the components of our formulations have never been disclosed together to form an unitary formulation solving the problems already mentioned. There is no predictable way, either a pathway without involving hundreds of trials (equally predictable as successful) to end up with the combination of features a to f.

It must be further noted that a benefit of the present invention over the prior art of the suspension concentrates already described in the prior art is that a valid composition as a suspension concentrate of SUs is astonishing equally valid for a top-notch matrix of a suspoemulsion, namely, when in the process of doing the SU SC, an additional oil-soluble agrochemical is added, the resulting SE has very good properties, both on the physicochemical stability side and in the biological activity side. This only advantage is worth to be available for industrial purposes, since a suspension concentrate process of production may be almost unaltered adapted to the production of suspoemulsions. Must be also noted that this in fact alone grants a degree of inventiveness (theoretically and in laboratory scale, is obvious that a SE process may be adapted to a SC process, but industrially not, and the proof is that such interchangeable processes SC to SE do not exist at industrial scale) not addressed in any other previous document regarding SU's SCs.

### Description of the invention

While the purpose of the inventors when performing the present invention was to provide an agrochemical stable formulation maintaining the integrity of the active ingredients (ai, ai1, ai2, etc.) and such formulation having an adequate herbicidal activity, the scope of protection of the present patent shall be understood as SCs or SEs wherein there is at least an insoluble in oil active ingredient (ai2) and optionally emulsion concentrates of oil soluble ingredients ai1. The teaching of the invention may be applied to other ai not explicitly mentioned in the present document, even for active ingredients that may be invented in the future, provided that for the skilled in formulation, the teaching of this invention is clearly useful to try with such other active ingredients (e.g., by virtue of chemical resemblance to the ais herein disclosed).

Throughout all the invention the mention of a single component, when describing general issues, is valid for a mixture of components of the same category. For example, the existence of one active ingredient (hereinafter, ai) dissolved in the oil phase, must be understood as well as the disclosure of a mixture of several ai soluble in such oil and with appropriate biological activity. The same is valid for the oil phase (e.g., mixtures of vegetable and mineral oils, mixtures of different types of mineral oils, etc).

In one embodiment, the invention refers to a novel process of production of combination of an emulsion concentrate with active ingredient ai1, and as oil dispersion of a oil-insoluble active ingredient ai2. Preferred ai1 are ai soluble in mineral or vegetable oil - whether derivatized by means of alkylation, e.g., soy oil methylated, palm oil ethylated/methylated, etc- and preferred ai2 is any ai insoluble in the same mineral or vegetable oil as that used to solubilize ai1, being at least a SU in the dispersed phase. The mineral and/or vegetal and/or derivatives of both are hereinafter referred as the "oil" (also referred to grammatically correct "oils" in the case of mixtures).

The invention is focused in a1 being Fluroxypyr and a2 being any SU herbicide -or mixture of sulfonylureas- of the formula (I), being compounds (I): 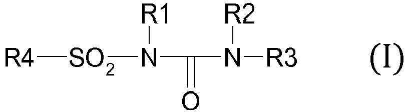 wherein,
R1 is H, alkyl, halogenated-alkyl, or anion (case of salts)
R2 is H alkyl, halogenated-alkyl, or anion (case of salts)
R3 is phenyl, halogenated phenyl, alkyl phenyl, acylaminoalkyl, halogenated-alkyl phenyl, halogenated-alkyl halogenated-phenyl, carboxy and/or methoxy and/or ethoxy and/or alkyl and/or hydroxyl and/or cyano and/or imino and/or nitro substituted or unsubstituted 4 to 7 partially or totally hydrogenated or non-hydrogenated heterocycle ring, such heterocycle containing one or more S and/or N and/or O atom(s)
R4 is phenyl, halogenated phenyl, alkyl phenyl, acylaminoalkyl, halogenated-alkyl phenyl, halogenated-alkyl halogenated-phenyl, carboxy and/or methoxy and/or ethoxy and/or alkyl and/or hydroxyl and/or cyano and/or imino and/or nitro substituted or unsubstituted 4 to 7 partially or totally hydrogenated or non-hydrogenated heterocycle ring, such heterocycle containing one or more S and/or N and/or O atom(s)
R2 and R4 (or R1 and the SO₂ / SO₂ alkyl group) may be cyclated forming a substituted or unsubstituted 4 to 7 partially or totally hydrogenated or non-hydrogenated heterocycle ring.

The latter corresponds, for example, to the sulfonylureas (actually sulfonylcarbonylamino heterocycles) Flucarbazone and Propoxycarbazone, that deviate from the general structure wherein this cyclation does not take place, but still maintain the biologically characteristic activity of most of the SUs consisting in the inhibition of synthesis of valine and isoleucine, or inhibition of acetolactate synthase.

Therefore, in a general way, the invention refers to compounds with the substructure 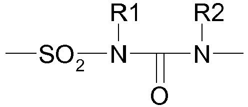 with herbicidal activity based in inhibition of acetolactase synthase, R1 and/or R2 forming part of a ring or not, whether covalently neutral or in the form of salts.

As indicated above, the groups R1 and R2 may be hydrogen, and when the molecule is deprotonated, a counter ion forms the corresponding salt.

As mentioned below, the invention refers in an embodiment to suspensions of sulfonylureas characterized in that such SC contains:
a. at least a herbicidal SU
b. an oil or mixture of oils; wherein the SU solubility is less than 10 g/kg
c. at least a dispersant soluble in oil of the type non-ionic ABA block copolymer or a polycondensed fatty acid
d. at least a wetter of the type C12-C20 alcohol ethoxylated and/or propoxylated
e. a C6-C18 alkyl benzenesulfonic acid, or alkaline and/or earth alkaline salts thereof
f. at least a suspending agent.

If we refer to desired ranges of the surfactants, this suspension comprises:
a. at least a herbicidal sulfonylurea
b. an oil or mixture of oils; wherein the sulfonylurea solubility is less than 10 g/kg
c. at least a dispersant soluble in oil of the type non-ionic block copolymer or polycondensed fatty acid at 0.1 to 10 wt.-%
d. at least two non-ionic surfactants of the type C12-C20 alcohol ethoxylated and/or propoxylated at 1 to 40 wt.-% and of the type castor oil ethoxylated at 1 to 40 wt.-%
e. at least one ionic emulsifier of the type C6-C18 alkyl benzenesulfonic acid, or alkaline and/or earth alkaline salts thereof at 1 to 35 wt.-%
f. at least a suspending agent at 0.01 to 10 %.

The exact quantities of each coformulant shall be determined by the need in strength of active ingredient and known needs for better absorption, and also the addition of other coformulants. As an indication for the skilled in the art, the preferred ranges are: for compounds c.: 0.1 to 10 %, for compounds d. (each one) 1 to 40 %, for compounds e.: 1 - 35 %, and compounds f: from 0.01 to 10%. Preferred ranges and specific combinations are shown in the examples, as well as the preferred number of ethoxylated and/or propoxylated mols per molecule of surfactant.

The SUs a. are those referred in the general formulas above, that include in a non limiting way the compounds: Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flucarbazone, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Propoxycarbazone, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron; and salts, ethers, esters thereof, in all their stereoisomeric forms.

The preferred commercial compounds (referred to determined ethers and esters) are: Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxysulfuron, Flazasulfuron, Flucarbazone-sodium, Flupyrsulfuron-methyl-sodium, Foramsulfuron, Halosulfuron-methyl, Imazosulfuron, Iodosulfuron-methyl-sodium, Mesosulfuron-methyl, Metsulfuron-methyl, Nicosulfuron, Oxasulfuron, Primisulfuron-methyl, Propoxycarbazone-sodium, Prosulfuron, Pyrazosulfuron-methyl, Rimsulfuron, Sulfometuron-methyl, Sulfosulfuron, Thifensulfuron-methyl, Triasulfuron, Tribenuron-methyl, Trifloxysulfuron-Sodium, Triflusulfuron-methyl, Tritosulfuron.

The size of the crystals shall be within the size of conventional suspension concentrates. However, a preferred crystal size is of 1-15 µm. Particularly recommended is a crystal size < 5 µm. Such low crystal size has been shown convenient to prevent sedimentation and it is not obvious that such range can be easily achieved by conventional milling without destroying the properties of the selected coformulants. To achieve such small particle size, a high stress in terms of pressure (also in temperature) is applied to the coformulants. We have surprisingly seen that such high stress does not influence the activity of the coformulants. Even the reverse, we have found that the best way to prepare the suspension concentrates and suspoemulsions is to mill all the compounds together, achieving a degree of homogeneity very high without compromising the activity of each coformulants.

The oils used for the purpose of the invention shall be those wherein the SUs are essentially insoluble. This may account for a solubility up to 10 g/kg, when the suspension concentrate is highly concentrated or up to 1 g/kg (0.1%) for usual concentrations of SUs suspension concentrates. Possible oils to use are petroleum solvents, paraffinic hydrocarbons, aromatic and non-aromatic hydrocarbons, halogenated aromatic and non-aromatic hydrocarbons, aromatic and non-aromatic ethers, esters, amides, ketones, alcohols; and other oils including but not limited to vegetable oils or silicon/fluorinated oils and derivatives thereof; and mixtures thereof. The skilled in the art trying to reproduce the invention should try first the solvents used in the examples and progressively replace partly or stepwise the explicitly disclosed oils, with an appropriate change of the concentration of the oil soluble dispersant if needed. It is an easy exercise to check (e.g., microscopic observation of crystal type/color/form) if, in case of performing the suspoemulsion of the invention, the secondary active ingredient is effectively dissolved in the total mixture. Obviously, combinations of oils wherein the active ingredients are not as desired dissolved (in the case of SEs) or suspended (the latter for the SUs), are not appropriate. There is however no great disadvantage to have partly the SU dissolved in the oil.

We have found specially convenient the following mixtures:
a. a mixture of naphtha heavy solvent and isoparaffinic oil; or
b. a mixture of paraffinic oil and natural vegetable oil or an hydrogenated or epoxidized or alkylated or saponified vegetable oil.

The mixture of solvents a. is economically convenient while the mixture b. is safer for toxicology purposes. We have found that the use of paraffinic oil allows a faster mixing of all ingredients and particularly an appropriate dispersion of the suspending agent when chosen for this purpose clays of the type Bentonite or derivatives thereof. Is for that reason that it is recommended to make a suspension of Bentonite in paraffinic oil at about 5-15% before adding the Bentonite to the rest of the ingredients. Curiously, the use of paraffinic oils for best activation of Bentonites is not described in the catalogs of the producers.

Another preferred embodiment is where the oil is a vegetable oil, preferably soybean oil, corn oil, cottonseed oil, sunflower oil, maize oil, rice oil, olive oil, linseed oil, rapeseed oil, palm oil, coconut oil; also any of the mentioned oils in saponified and/or alkylated (preferably methylated of ethylated) form.

While many prior art documents make use of inorganic dispersing agents for oil suspension or oil dispersion systems, we prefer the use of organic dispersing agents. While it is difficult to find a suitable oil dispersant soluble in oil that won't compromise a suspoemulsion containing it, we have found that block copolymers ethoxylated and/or propoxylated provide a good dispersion of the SUs. A representative type of this dispersants are Atlox^{®} 4912, 4913, 4914 or the polycondensed fatty acid Atlox^{®} LP-1 (CAS No. 548475-72-5), LP-2, LP-6 from Uniquema.

A secondary oil dispersant (or substituting the abovementioned one) is also recommended when the SU is not correctly dispersed. To evaluate this, a mixture of SU : oil 45 parts : 50 parts shall be done, and then the 1 parts of the first dispersant in oil are added (e.g., Atlox^{®} LP-1). A visible acceptable dispersion (however not at all perfect, since this test is done prior to milling, and of course not stable over time) must be attained. If not, it can be added another 1 part of the secondary dispersant (as, for example, Atlox^{®} 4914 with CAS No. 173717-47-0, from Uniquema). A need in higher content of dispersant may be achieved up to 7 parts of mixture or individual oil soluble dispersants. Even if at this stage the dispersion is far from recommendable, the final check should be at the end of the process, after milling, and with all components present, since there are synergistic effects regarding dispersion activity.

Ternary or higher mixtures of dispersants may be present, but are not the first choice for the skilled in the art, for logistic reasons (less ingredients) and for the sake of simplifying a already complex mixture.

For the purpose of emulsifying the oil phase into water prior to field application, there is a need of at least two different type of surfactants. Further, this need is emphasized when the invention is embodied as a suspoemulsion, wherein the ai dissolved in the oil need to be perfectly homogeneuos.

The inventors have taken the approach of improving the emulsifying characteristics of the SC and the SE by means of selecting a very effective surfactant mixture in the context of our formulation that at the same time improves the foliar absorption of the active ingredients. Therefore, a first surfactant is selected from the group of surfactants that have wetting activity (wetters), while at the same time providing good emulsion, especially for our SEs. Of the many available surfactants we have found as surprisingly effective wetters and emulsifiers are those of the type C12-C20 alcohol ethoxylated and/or propoxylated. Particularly effective are fatty alcohols 2 to 45 mols propoxylated or ethoxylated or ethoxylated/propoxylated, and the most preferred is stearyl alcohol 15 mols propoxylated. This type of wetter / emulsifier shows improved emulsion and biological activity of the SC or the SE with prior disclosed SE or SC.

Another needed feature of the invention is the presence of an alkoxylated castor oil, preferably castor oil ethoxylated and/or propoxylated with 32 to 60 mols. While we have observed that the main factor that drivens the biological activity of the herbicide (namely, help to penetrate the plant) is the presence of the fatty alcohol ethoxylated and/or propoxylated, the presence of castor oil improves very much the emulsion properties of the suspension concentrate, and more importantly the emulsion of the secondary active ingredient that is present when this invention is embodied by a suspoemulsion, in particular, when Fluroxypyr is used as secondary ai in combination with SUs.

A necessary feature in the present invention, apart from the above mentioned two non-ionic surfactants of the type fatty alcohol and castor oil, is the presence of a ionic emulsifier of the type alkylbenzenesulfonic salt, preferably in the form of calcium or sodium salt, also possible as ethanolamine or ammonium salts, in between others. Preferred is calcium dodecylbenzenesulfonate or the corresponding sodium salt.

The number of mols is determinant for the hydrophilic-lipophilic balance (HLB) of the surfactant. The best results are found when the additional surfactant has an HLB of 7 to 14. Preferred number of mols of ethoxylation and/or propoxylation is from 10 to 40, both for the fatty alcohol propoxylates and for the castor oil, and also for any additional surfactant present in the composition.

For the performance of the invention what is important regarding emulsifiers is the presence of fatty alcohol ethoxylates and/or propoxylates, castor oil ethoxylateds and/or propoxylates and the alkylbenzenesulfonate in the way described above. However any other surfactants are in principle able to be used in so far they are present not above 10 to15 %, since at such higher concentrations the performance of the invention may be compromised. Such additional surfactants are preferably selected from those usual in agriculture (e.g., selected from the catalog of Uniquema or Rhodia, incorporated herein in full by reference) and those with a HLB value of 6 to 14. The skilled in the art trying to reproduce the invention should first try the emulsifiers disclosed explicitly herein. Addition of other surfactant types shall be performed starting as low as 1% and increasing the quantity (vs. the oil, for example) until a maximum in emulsification properties is observed (e.g., smallest particle size measured with a laser diffraction particle sizer, of the type Mastersizer^{®}). The inventors have observed that the presence of the above mentioned surfactants is enough to achieve the multiple targets of the invention, and any further addition higher than 3% of surfactants not of the classes disclosed above are detrimental for the properties of the formulation, with the exception of the optional use of sorbitan derivatives.

A preferred embodiment wherein is then to use a sorbitan derivative surfactant at 0.1 to 15 %, preferably of the type poly(oxy-1,2-ethanediyl) hepta-9-octadecanoate sorbitan, wherein the number of mols of oxy-1,2-ethanediyl is from 2 to 40, and most preferably of the type poly(oxy-1,2-ethanediyl)tri-9-octadecenoate sorbitan and/or poly(oxy-1,2-ethanediyl)monolaureate sorbitan, wherein the number of mols of oxy-1,2-ethanediyl is from 2 to 40. Most preferred ranges of ethoxylation and/or propoxylation of sorbitan derivatives are from 5 to 15 mols.

Non-ionic surfactants that may be added to the formulation without compromising the benefits of the selected ones according the invention (up to 20%, and with the strong recommendation that the HLB of such additional emulsifiers have an HLB of 6-14) are: alkyl ethoxylates/propoxylates, nonylphenol ethoxylates/propoxylates, tributylphenol ethoxylates/propoxylates, tristyrylphenol ethoxylates/propoxylates, alkyl alkoxylates, ethylene oxide-propylene, oxide block co-polymers, fatty acid polyethyleneglycol esters, fatty acid polyglycerol esters, fatty acid polyglycerol, ester ethoxylates/propoxylates, sorbitan ester ethoxylates/propoxylates, wax emulsifiers and, of course, castor oil ethoxylates/propoxylates and fatty alcohol ethoxylates/propoxylates mixtures. Endcapped polymeric surfactants are also suitable, as butyl-end capped coconut fatty alkyl ethoxylated.

Ionic surfactants to be used as in the paragraph above are: secondary alkyl sulphonates, olefin sulphonates, alkyl sulphites, alkyl eter sulphates, alkyl aryl ether sulphates, polyglycol ether sulfates, sulphosuccinic acid esters, fatty alkyl amine sulphosuccinamates, alkyl phosphoric esters, phosphoric acid esters, alkyl phosphonic acids, alkyl polyethylene glycol ether carboxylic acids, fatty acid isothionates, alkyl taurides, sarkosin, sarkoside, quaternary ammoniunm salts, and of course, alkyl benzene sulphonates Ca or Na salts.

Regarding copolymerized surfactants that may be aditionally used are allyl polyoxyalkylene sulphates.

Regarding suspending agents, a typical component of SCs and SEs, it is also needed in our formulation, but thanks to the properties imparted by the other components this suspending agent, may be present as low as at 0.01 %, normally at 0.2 to 1 %. The upper limit shall be that that compromises the viscosity of the total mixture in such a way the pourability is below what is necessary for a correct use of the formulation, normally clearly reflected in FAO/WHO specifications and easily to determine according the respective and constantly improved CIPAC methods of analysis. The suspending agents may be hydrophilic and hydrophobic silicas, colloidal silicon dioxides, pyrophillite, diatomaceous earth, montmorillonite, sepiolite, zeolite, attapulgite, and organically modified montmorillonite clays in between many others. We prefer the use of Bentonites whether organically modified or not (as Bentone^{®} 34), or organomodified smectite clays. A particular finding for the process according the present invention is to suspend (for speed up the mixing process) firstly the suspending agent in at least one oil that forms part of the composition at 5 to 15 %, as mentioned before. For example, suspending a Bentonite at 10 % in isoparaffinic oil improves the speed of homogeneization of the total mixture, and also serves as an effective non-aqueous-"wetting" of the Bentonite displacing air and pre-dispersing the Bentonite (by default any other clay).

An antifoam is also appropriate since the content in foam-generating surfactants needed to maintain the SUs perfectly dispersed, and further allow their emulsification (better said, redispersion in water), and additionally, to allow the emulsification of an eventual secondary active ingredient (e.g. Fluroxypyr) dissolved in the oil, makes a considerable amount of foam under agitation and aeration in the spray tank. This is however perfectly solved with adittion of an antifoam, as for example fluorine-based antifoams in the concentration recommended by the supplier (as a thumb rule, 0.1 %). Other antifoams may be silicone containing defoamers, polyalkylene glycol based defoamers, phosphate ester based defoamers, mineral oil based defoamers (in particular those containing phosphorous). It is recommended not to exceed 3% of total content defoamer, since this substances are very active and we have not seen improvements over the defoaming activity over this limit: better than to increase the defoamer over this quantity is to increase other coformulants, as for example the emulsifiers.

The addition of coformulants (as extensive word representing anything that is present in an agrochemical formulation and is not the essential biologically active ingredient) usual in agriculture can be done without prejudice of the advantages of the invention. This way it can be added freely in customary amounts: antifreezing agents, further viscosity modifiers, film forming agents, anticrystallizants -also in the form of cosolvents-, microbiological-controlling agents, fragrances, colorants, pH regulators, safeners, dyes, markers for identification of origin of the producer, flame retardants, antioxidants, stabilizers of the chemical integrity of the active ingredients or the coformulants, visible light protectors and UV-light protectors, water reducing agents to prevent undesirable hydrolysis, etc.

In an extended way, other active ingredients may be added to the herbicidal SCs of SUs, and not precisely limited to herbicidal compounds. A wide range of active ingredients that may be dissolved in the oil (forming a suspoemulsion) may be added during to process at any stage or preferably in an separate Premix containing an aliquot of the oil (or one of the oils) before milling. In another embodiment, they are insoluble in oil and are milled together with the SUs. These active ingredients may belong in a non-limiting way to the groups of: herbicides, herbicide's safeners, fungicides, bactericides, insecticides, insect antifeedants, pheromones, acaricides, miticides, nematocides, plant growth regulators and organic or inorganic foliar fertilizers. Must be noted that for certain SUs is not convenient to combine them with organophosphate insecticides, although this exception may not always be applicable (e.g., risks of interference are lower than the need of control of a pest). The skilled in the art shall always pay attention to any possible incompatibilities.

It is also possible to add to the SU suspension concentrate other oil-insoluble (or water soluble) herbicides that are interesting for control of certain weeds in certain crops, as known for the described properties of controlling weeds of such other herbicides. In that case, they will be treated in the process of production as if they were SUs and will be incorporated in the same way as the SUs are incorporated. Preferred oil-insoluble herbicides that may be combined with the SUs of the present invention are salts of glyfosate, sulfosate, MCPA, 2,4-D, 2,3,6-TBA salts or paraquat or diquat dichloride or dibromide. Preliminary trials with glyfosate and MCPA show that the resulting SCs are equally suitable and advantageous regarding physicochemical stability and that the SUs are not chemically decomposed by them. The skilled in the art, in order to combine SUs in the SC of this invention must do only the same stability tests (formulation stability and active ingredients stability) as when checking the suitability of any agrochemical formulation. The quantity in which this oil-insoluble herbicides may be incorporated shall be determided by the common practice in formulation and attending the need of working at high ranges of oil soluble dispersants as disclosed herein, preferably using at least two different oil dispersants. If the properties of the emulsion are not as satisfactory as expected, modifications of the ionic surfactant alkylbenzenesulfonate is the first choice in order to improve the results: since the referred oil-soluble compounds are water soluble and moreover may be in ionic form, is essential to fine tune the anionic surfactant used in the present invention, at first choice, increasing its content.

Preferred herbicides that may be combined with the SUs in the oil phase (emulsified, dissolved) to form a suspoemulsion (SE) according the present invention are: Fluroxypyr, Tryclopyr-butotyl, Picocloram-isopropylammonium, Clopyralid, Metosulam, Diflufenican, Isoproturon, Ioxynil, Bromoxynil, Mecoprop-P, Dichlorprop, Dicamba, MCPA, Bifenox, Carfentrazone-ethyl, 2,4-D, Lactofen, Mesotrione, Sulcotrione, Isoxaflutole, Quizalofop-P-ethyl, Fluazifop-P-butyl. Obvious extension of the possible combination of herbicides with SUs are those belonging to the same chemical class as those described above, or any other herbicides that when being substituted from other ais from the examples also yield acceptable formulations.

As already said, the primary intention of the inventors was to find a suitable suspoemulsion of certain SUs with Fluroxypyr. This combination has the advantage of combining the spectrum of activity of certain SUs (e.g., Metsulfuron, Tribenuron, Thifensulfuron, Rimsulfuron, Nicosulfuron and binary and ternary mixtures thereof) with the spectrum of Fluroxypyr. Particularly preferred combinations are Thifensulfuron and Metsulfuron, with (SE) or without (SC) Furoxypyr.
1. The active ingredients according to the invention and the formulations according to the invention can be employed as herbicides against a broad spectrum of economically important monocotyledonous and dicotyledonous harmful plants. The active compounds also act efficiently on perennial weeds which produce shoots from rhizomes, root stocks or other perennial organs and which are difficult to control. The formulations may be applied pre-sowing, pre-emergence or post-emergence. Specifically, examples may be mentioned of some representatives of the monocotyledonous and dicotyledonous weed flora which can be controlled by the compounds according to the invention, without these being restricted to certain species. Examples of weed species on which the active compounds and formulations act efficiently are: *Gallium aparine, Rumex spp.* and particularly *Rumex acetosa, Rumex crispus, Rumex obtusifolius, Kochia spp., Urdica dioica, Calystegia sepium, Convolvulus spp.* and particularly *Convulvulus arvensis, Solanum nigrum, Bilderkydia convolvulus, Cerastium arvense, Galeopsis tetrahit, Lamium amplexicaule, Malva sylvestris, Mysotis arventis, Parietaria spp., Sinapsis arvensis, Spergula arvensis, Stellaria media, Cytisus scoparius, Epilobium angustifolium, Ulex spp., Abutilum theophasti, Adonis spp., Agrostemma githago, Amaranthus spp., Arenaria spp., Bilderdykia convolvulus, Capsella bursa-pastoris, Chenopodium album, Datura stramonium, Diplotaxis erucoides, Lamium amplexicaule, Lithospermum arvense, Myosotis palustris, Papaver rhoeas, Polygonum aviculare, Portulaca oleracea, Raphanus raphanistrum, Silene spp., Sisymbrium orientalis, Veronica persica, Xantium spinosum, Adonis aestivalis, Anthemis arvensis, Buglossoides arvensi, Chamomilla recutita, Chenopodium album, Diplotaxis erucoides, Papaver rhoeas, Ridolphia saegetum, Salsola kali, Sisymbrium orientalis, Vaccaria segetum, Anagallis arvensis, Cirsium arvense, Fumaria officinalis, Hypecoum procumbens, Veronica hederifolia, Sorghum halepense, Avena sterilis, Echinochloa spp.* and specially *Echinochloa crus-galli, Lolium rigidum, Panicum miliaceum, Setaria verticillata ,Setaria viridis, Digitaria sanguinalis, Abutilon theophrasti, Amaranthus blitoides, Amaranthus retroflexus, Artemisia spp., Coronopus spp., Sorgum halepense, Diplotaxis spp., Eruca vesicaria, Helianthus annus, Portulaca oleracea, Reseda spp., Sonchus spp., Xanthium strumarium.*

The formulations according to the invention are especially appropriate to control weeds in cereals. Preferred targeted weeds are those of cereals crops (best for corn, oath, wheat).

Of special significance is the control of *Gallium spp.,* in particular, *Gallium aparine,* due to its resistance to many SUs and the increased resistance developed in the last years. The combination of Fluroxypyr and SUs according to biological results of our suspoemulsion, controls Gallium aparine at 100%. Combinations as Floroxypyr + Metsulfuron, or Fluroxypyr + Thifensulfuron + Tribenuron provide a total control of this economically very important weed.

For the control of the aforementioned weeds, it is needed that the farmer (and the skilled in the art) pays attention to the different application rates and stage of the crop, and the crops themselves, recommended for the use of each herbicide present in the SC or the SE.

In another aspect of the invention, it is referred to a process for preparing the suspoemulsion in an industrially fast and effective method, by way of mixing the ingredients in a preferred order:
a. Preparing a Premix 1 consisting in at least in one active ingredient (ai1) that is dissolved in at least one oil
b. Preparing a Premix 2 consisting in at least two non-ionic surfactants s1 and s2, respectively a fatty alcohol ethoxylated and/or propoxylated and a castor oil ethoxylated and or propoxylated, that are dispersed or solubilized in an oil
c. Preparing a Premix 3 consisting in at least one secondary active ingredient being this a SU herbicide that is dispersed in an oil with the aid of an oil-soluble dispersant of the type non-ionic block copolymer ethoxylated or polycondensed fatty acid
d. Preparing a Premix 4 consisting in at least a suspending agent dispersed an oil and at least one ionic surfactant of the type alkylbenzenesulfonate salt
e. Mix A is subjected to a milling process in order to reduce the particle size of the crystals (as an average) of the ai2 to 1-15 µm. This milling process should preferably not be under - 5 °C -mainly for viscosity problems- and not over a temperature that compromise the integrity of the ai more labile to heat and pressure stress, in general in no moment the temperature of the product should be over 70 °C, and in industrial terms, the outlet temperature should be from 10 - 40 , more preferably 25- 35 °C. If, in order to achieve these temperatures, it is needed an intermediate cooling step (down to 0 °C, for example) this shall be performed (this is suitable and easy to perform when mills in series are located with a heat exchanger in between them).
f. The product is finally cooled down to room temperature naturally and ready for packing.

This aspect of this invention may also be described in a more general way as a:
Process of preparing a suspoemulsion, containing at least a suspended sulfonylurea in oil and at least one active ingredient soluble in such oil, consisting on the steps of:
   a. Preparing a Premix 1 consisting in at least in one active ingredient that is dissolved in at least one oil
   b. Preparing a Premix 2 consisting in at least two non-ionic surfactants, respectively a fatty alcohol ethoxylated and/or propoxylated and a castor oil ethoxylated and/or propoxylated, that are dispersed or solubilized in an oil
   c. Preparing a Premix 3 consisting in at least one secondary active ingredient being this a sulfonylurea herbicide that is dispersed in an oil with the aid of an oil-soluble dispersant of the type non-ionic block copolymer ethoxylated and/or propoxylated and/or a condensed fatty acid ethoxylated and/or propoxylated
   d. Preparing a Premix 4 consisting in at least a suspending agent dispersed in an oil and at least one ionic surfactant of the type alkylbenzenesulfonate salt
   e. According to the desired final concentration on the active ingredients, an aliquot of each Premix is taken.
   f. The mix of Premixes is subjected to a milling process in order to reduce the particle size of the crystals (as an average) of 1 to 15 µm.
   g. The product is finally cooled down to room temperature naturally and ready for packing.

If we refer to desired ranges of the components, it can be prepared a suspension manufactured as described above that comprises:
a. at least a herbicidal sulfonylurea
b. an oil or mixture of oils; wherein the sulfonylurea solubility is less than 10 g/kg
c. at least a dispersant soluble in oil of the type non-ionic block copolymer or polycondensed fatty acid at 0.1 to 10 wt.-%
d. at least two non-ionic surfactants of the type C12-C20 alcohol ethoxylated and/or propoxylated at 1 to 40 wt.-% and of the type castor oil ethoxylated at 1 to 40 wt.-%
e. at least one ionic emulsifier of the type C6-C18 alkyl benzenesulfonic acid, or alkaline and/or earth alkaline salts thereof at 1 to 35 wt.-%
f. at least a suspending agent at 0.01 to 10 %.

The process described above may seem an arbitrary distribution of the components of the final formulation in four sets. However, we have experienced through several tests that this is the fastest way to produce an adequate homogenization of all the ingredients previous milling. It is also a problem addressed, thus, the quickness in the industrial production of SC and SE of SUs, issue that has its technological and economical advantages.

However, the invention refers to the compositions themselves, and therefore any process may be used according to this invention, since the benefits of the invention are also present -but not to the same extent- when performing conventional SCs or SEs.

What we have surprisingly found is that the best stability of the SC and the SE of SUs are achieved (whether taking the steps of dividing the components in four Premixes or not) when all the ingredients are milled together. This is not an usual process in the industry, since many times is more convenient (less quantity of material to pass through the mills, and less risk of cross-contamination in the mills) to mill the SU with an aliquot of the oil and some dispersing agents in a separate step, and then mix the rest of the ingredients to this milled SU.

To produce the SC or SE according what is described above, the solid and insoluble in oil active ingredient is a SU and the first active ingredient is selected from oil-soluble active ingredients. Processes of special interest according to the process above are characterized in that first active ingredient is selected from the group: Fluroxypyr, Tryclopyr-butotyl, Picocloram, Clopyralid, Metosulam, Diflufenican, Isoproturon, Ioxynil, Bromoxynil, Mecoprop-P, Dichlorprop, Dicamba, MCPA, Bifenox, Carfentrazone-ethyl, 2,4-D, Lactofen, Mesotrione, Sulcotrione, Isoxaflutole, Quizalofop-P-ethyl, Fluazifop-P-butyl, in all their stereoisomeric forms and degrees of alkylation and the SU is selected from the group: Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flucarbazone, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Propoxycarbazone, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron; and salts, ethers, esters thereof, in all their stereoisomeric forms.

Obviously, it is also possible to take the advantages of the present invention on the basis of the ingredients of the formulations SC or SE, and use any other process for producing the SC or SE of the invention. Although the process specific to this invention adds stability even not with the optimal presence of coformulants (see the benefit of the disclosed process in Examples 1 and 2), the overwhelmingly important factor to solve the problems addressed by this invention is the composition of the formulation.

A note regarding the hydrophilic-lipophilic balance (HLB value) of the surfactants used in the invention must be made, since the emulsifier activity or even the dispersing activity depends on the HLB, even for the same class of surfactants. The skilled in the art would know which are the most appropriate HLB to choose by general known chemistry, but sometimes with the need of a reasonable trial and error effort. In order to reduce the amount of trials to perform -if ever this is needed-, we recommend that the HLB of at least one fatty alcohol ethoxylated and/or propoxylated is high, from 10 to 20 (in terms of mols of ethoxylation or propoxylation, 2 to 45). Further, the HLB of the castor oil ethoxylated and/or propoxylated is recommendable to be from 9 to 19 (preferred number of ethoxyl or propoxyl mols from 32 to 56), most preferably from 10 to 15. The recommended HLB for sorbitan derivatives -namely, ethoxylated and/or propoxylated- (if desired to be used) is from 8 to 20 (also, a degree of ethoxyl or propoxyl mols of 4 to 20).

This invention refers as well to the use of the described suspoemulsion of at least one sulfonylurea and Fluroxypyr for the control in cereal crops of the weeds: *Gallium aparine, Rumex acetosa, Rumex crispus, Rumex obtusifolius, Kochia spp., Urdica dioica, Calystegia sepium, Convulvulus spp., Convulvulus arvensis, Solanum nigrum, Bilderkydia convolvulus, Cerastium arvense, Galeopsis tetrahit, Lamium amplexicaule, Malva sylvestris, Mysotis arventis, Parietaria spp., Sinapsis arvensis, Spergula arvensis, Stellaria media, Cytisus scoparius, Epilobium angustifolium, Ulex spp., Abutilum theophasti, Adonis spp., Agrostemma githago, Amaranthus spp., Arenaria spp., Bilderdykia convolvulus, Capsella bursa-pastoris, Chenopodium album, Datura stramonium, Diplotaxis erucoides, Lamium amplexicaule, Lithospermum arvense, Myosotis palustris, Papaver rhoeas, Polygonum aviculare, Portulaca oleracea, Raphanus raphanistrum, Silene spp., Sisymbrium orientalis, Veronica persica, Xantium spinosum, Adonis aestivalis, Anthemis arvensis, Buglossoides arvensi, Chamomilla recutita, Chenopodium album, Diplotaxis erucoides, Papaver rhoeas, Ridolphia saegetum, Salsola kali, Sisymbrium orientalis, Vaccaria segetum, Anagallis arvensis, Cirsium arvense, Fumaria officinalis, Hypecoum procumbens, Veronica hederifolia, Sorghum halepense, Avena sterilis, Echinochloa spp.* and specially *Echinochloa crus-galli, Lolium rigidum, Panicum miliaceum, Setaria verticillata ,Setaria viridis, Digitaria sanguinalis, Abutilon theophrasti, Amaranthus blitoides, Amaranthus retroflexus, Artemisia spp., Coronopus spp., Sorgum halepense, Diplotaxis spp., Eruca vesicaria, Helianthus annus, Portulaca oleracea, Reseda spp., Sonchus spp., Xanthium strumarium.*

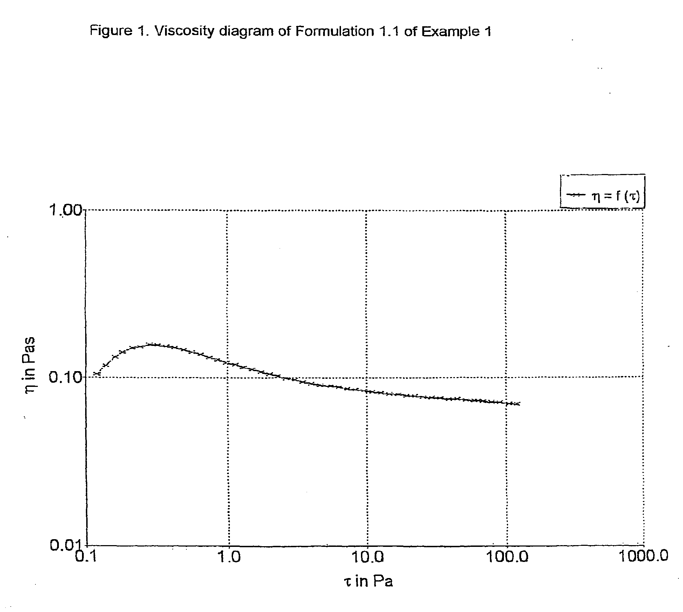

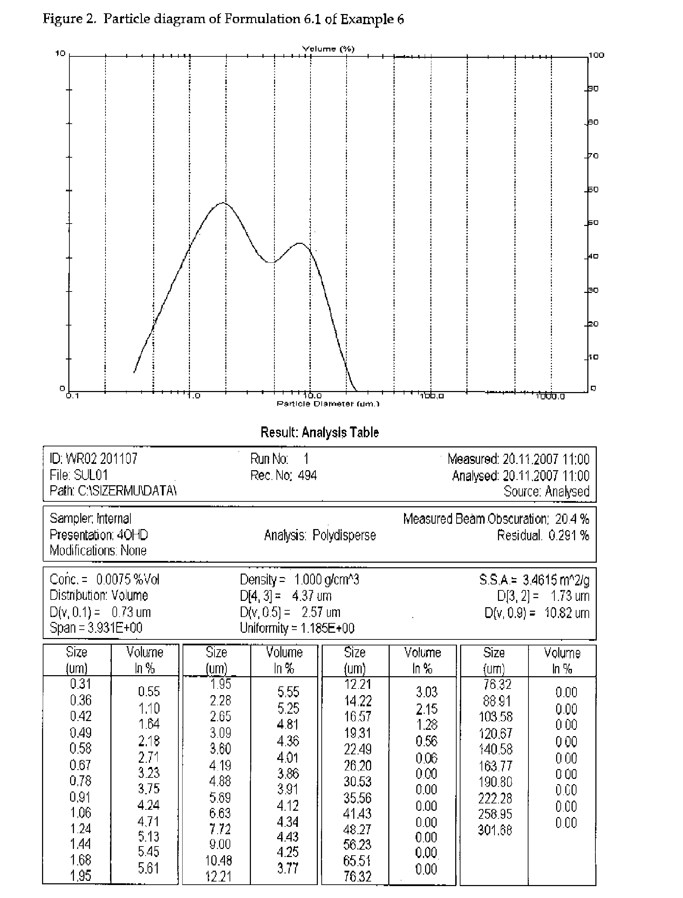

Figure 1 represents a typical viscosity diagram of the Formulations according the present invention (in particular the composition of Example 1, 1.1). Figure 2 represents a typical particlesize diagram of the Formulations according the present invention (in particular the composition of Example 1, 1.1)

Following we present some Examples of embodiments of the invention as well as comparative tests done with the formulations according to the invention.

### Example 1

The four Premixes are done as follows (the sum of final composition in size of 20 kg):

**PREMIX 1.1**

| **Components** | **wt-%** |
|---|---|
| Fluroxypyr meptyl tech. (98.98% pure) | 50.0 |
| Solvesso^{®} 150 | 50.0 |
| **SUM** Premix 1 | 100.0 |

**PREMIX 2.1**

| **Components** | **wt**-% |
|---|---|
| Solvesso^{®} 150 | 42.0 |
| Arlatone^{®} T | 42.0 |
| Arlamol^{®} E | 10.0 |
| Brij^{®} 98 | 4.0 |
| Brij^{®} 721 | 2.0 |
| **SUM** Premix 2 | 100.0 |

**PREMIX 3.1**

| **Components** | **wt-%** |
|---|---|
| Rimsulfuron (98.64% pure) | 42.0 |
| Isopar^{®} M | 42.0 |
| Atlox^{®} 4914 | 10.0 |
| Atlox^{®} LP1 | 6.0 |
| **SUM** Premix 3 | 100.0 |

**PREMIX 4.1**

| **Components** | **wt-%** |
|---|---|
| Rhodosil^{®} 454 | 0.3 |
| Emulsogen^{®} EL 540 | 15.0 |
| Alkamuls^{®} VO/2003 | 58.0 |
| Calsogen^{®} 4814 | 24.7 |
| Bentonite | 2.0 |
| SUM Premix 3 | 100.0 |

**MIX A**

| **Components** | **wt-%** |
|---|---|
| Premix 1 | 60.0 |
| Premix 2 | 10.0 |
| Premix 3 | 8.0 |
| Premix 4 | 22.0 |
| SUM MIX A | 100.0 |

The final composition, according to the aliquots of each Premix is:

**TOTAL COMPOSITION**

| **Components** | **wt-%** |
|---|---|
| Rimsulfuron (98.64% pure) | 3.4 |
| Fluroxypyr meptyl tech. (98.98% pure) | 30.0 |
| Solvesso® 150 | 34.2 |
| Isopar M | 3.4 |
| Atlox LP1 | 0.5 |
| Atlox 4914 | 0.8 |
| Arlamol^{®} E | 1.0 |
| Brij^{®} 98 | 0.4 |
| Brij^{®} 721 | 0.2 |
| Emulsogen^{®} EL 540 | 3.3 |
| Alkamuls^{®} VO/2003 | 12.8 |
| Calsogen^{®} 4814 | 5.4 |
| Arlatone® T | 4.2 |
| Bentonite | 0.4 |
| Rhodosil 454 | 0.1 |
| **SUM** Final Formulation | 100.0 |

The four premixes are divided in two lots (one for 1.1 process and another lot for 1.2 process) of equal weight each (10 kg) and subjected to two different processes (both compositions fall in the scope of the invention):

### §1.1 According to the specific preferred process of the invention:

In a reactor of half of each four premixes are mixed until homogenization, resulting in mix A.1.1 (that corresponds to half weight, namely 10 kg, of the total prepared Premixes).

The mix A.1.1 is then cooled to 5 °C.

In a bead mill cooled in the outer shirt to 2 °C, it is introduced the homogenized mixture and the speed and the quantity and size of the beads to the appropriate parameters in order to obtain a crystal size reduction of 1.5 µm.

The process is controlled in that way that the mix A.1.1 reaches a measured maximum temperature during milling of 57 °C and an outlet average temperature of 30 °C with a measured average particle crystal size of 1.6 µm.

The final product is warm up naturally in a reactor at room temperature, and an aliquot is left in a measuring cylinder of 250 mL at at 54 °C. Observation of bleeding is made each 24 hours for three weeks.

### §1.2 Not according to the specific preferred process of the invention:

In a reactor the three premixes assigned to this trial -namely, all but the one containing the SU- are mixed until homogenization, resulting in mix A.1.2 and it is cooled down to 5 °C.

In a bead mill cooled in the outer shirt to 2 °C, it is introduced the (half of) Premix 3.1.2 and the speed and the quantity and size of the beads to the appropriate parameters in order to obtain a crystal size reduction of 1.5 µm. Premix 3.1.2 means the half of the above described Premix 3.1. (and so on).

The process is controlled in that way that the milled Premix 3.1.2 reaches a measured maximum temperature during milling of 61 °C and an outlet average temperature of 28 °C with an average particle size of crystals of 1.3 µm.

After such step, the milled Premix 3.1.2 is cooled down in a reactor with water/polypropylene gycol 50:50 shirt in a period of 3 hours to 5 °C. In the same way premixes 1.1.2 and 2.1.2 are cooled down simultaneously.

When all the three mixes (Premix 1.1.2, 1.2.2 and milled Premix 1.3.2) are at 5 °C they are mixed till homogenization as in §1.1. Then they are left to warm up naturally to room temperature.

The reason of cooling down to 5 °C is in order to equate the conditions of temperature at the time of mixing in §1.1 and in §1.2 for more comparability of the results.

The resulting product (an aliquot) of this process §1.2 is left in a measuring cylinder of 250 mL. Observation of bleeding is made each 12 hours.

**Bleeding results of product according Process §1.1 and §1.2**

| Time | | |
|---|---|---|
| in days | Oil Bleeding in mL | |
| | ***Process*** | ***Process*** |
| | ***§1.1*** | ***§1.2*** |
| 1 | 0 | 0 |
| 2 | 0 | 1 |
| 3 | 0 | 1 |
| 4 | 0 | 1 |
| 5 | 0 | 1 |
| 6 | 0 | 1 |
| 7 | 0 | 1 |
| 8 | 0 | 1 |
| 9 | 0 | 1 |
| 10 | 0 | 1 |
| 11 | 0 | 1 |
| 12 | 0 | 2 |
| 13 | 0 | 2 |
| 14 | 0 | 2 |
| 15 | 0 | 2 |
| 16 | 0 | 3 |
| 18 | 0 | 5 |
| 20 | 0 | 5 |
| 21 | 0 | 8 |

It is shown that if the Premix 3.1.2 is milled in the absence of the other coformulants (generally we include the ai as coformulant, as part of the formulation) produces increased bleeding in comparison to the process according the description. After 3 weeks the suspoemulsion according the invention do not show oil separation on the top of the measuring cylinder.

Oil separation has two effects: on one side a dissatisfaction of the consumer and second and more importantly, an inhomogeneous distribution of the active ingredient in the field, when the formulation is finally used by the farmer, and also, the lack of homogenized provokes that not all the drops are equally capable to perform the biological function required. Although the oil separation may be reversible, in the practice, few farmers follow the instructions of "shake before use", especially when hundreds of bottles are to be sprayed in the field.

### Example 2

Terwet^{®} 220 is a ethoxylated tallow amine blend available from Huntsmann. Tween^{®} 20 and Tween^{®} 85 are sorbitan derivatives available from Croda Intl. PLC. Bentone^{®} 34 is an organomodified Bentonite. Atlox^{®} 4912 is an oil-soluble non-ionic dispersant of the type ABA copolymer.

An additional test is done in the same way as above with the following composition:

**PREMIX 1**

| **Components** | **wt**-% |
|---|---|
| Fluroxypyr BPE and Diflufenican at 50:50 wt.-% | 50.0 |
| Isopar^{®} M | 50.0 |
| **SUM** Premix 1 | 100.0 |

**PREMIX 2**

| **Components** | **wt-%** |
|---|---|
| Isopar^{®} M | 42.0 |
| Genapol^{®} LA 050 | 42.0 |
| Tween^{®} 80 | 10.0 |
| Tween^{®} 20 | 4.0 |
| Terwet^{®} 220 | 2.0 |
| **SUM** Premix 2 | 100.0 |

**PREMIX 3**

| **Components** | **wt-%** |
|---|---|
| Rimsulfuron (98.64% pure) | 42.0 |
| Solvesso^{®} 150 | 42.0 |
| Atlox^{®} 4912 | 10.0 |
| Epoxidized soybean oil | 6.0 |
| **SUM** Premix 3 | 100.0 |

**PREMIX 4**

| **Components** | **wt-%** |
|---|---|
| Rhodosil^{®} 454 | 0.3 |
| Emulsogen^{®} EL 540 | 15.0 |
| Alkamuls^{®} VO/2003 | 54.0 |
| Calsogen^{®} 4814 | 24.7 |
| Bentone^{®} 34 (10% in Isopar L) | 6.0 |
| SUM Premix 3 | 100.0 |

**MIX A**

| **Components** | **wt-%** |
|---|---|
| Premix 1 | 60.0 |
| Premix 2 | 10.0 |
| Premix 3 | 8.0 |
| Premix 4 | 22.0 |
| SUM MIX A | 100.0 |

The final composition, according to the aliquots of each Premix is:

**TOTAL COMPOSITION**

| **Components** | **wt-%** |
|---|---|
| Rimsulfuron (98.64% pure) | 3.4 |
| Fluroxypyr BPE and Diflufenican at 50:50 wt.-% | 30.0 |
| Isopar^{®} M | 34.2 |
| Solvesso^{®} 150 | 3.4 |
| Epoxydized soybean oil | 0.5 |
| Atlox^{®} 4912 | 0.8 |
| Tween^{®} 80 | 1.0 |
| Tween^{®} 20 | 0.4 |
| Terwet^{®} 220 | 0.2 |
| Emulsogen^{®} EL 540 | 3.3 |
| Alkamuls^{®} VO/2003 | 11.9 |
| Calsogen^{®} 4814 | 5.4 |
| Genapol^{®} LA 050 | 4.2 |
| Bentone^{®} 34 (10% in Isopar L) | 1.3 |
| Rhodosil^{®} 454 | 0.1 |
| **SUM** Final Formulation | 100.0 |

The corresponding results of proceeding as the process §1.1 or §1.2 (herein named respectively §2.1 and §2.2) are as follows:

| Time | | |
|---|---|---|
| in days | Oil Bleeding in mL | |
| | ***Process §2***.***1*** | ***Process §2.2*** |
| 1 | 0 | 0 |
| 2 | 0 | 1 |
| 3 | 0 | 1 |
| 4 | 0 | 1 |
| 5 | 2 | 1 |
| 6 | 2 | 3 |
| 7 | 2 | 3 |
| 8 | 2 | 3 |
| 9 | 2 | 3 |
| 10 | 2 | 3 |
| 11 | 2 | 3 |
| 12 | 2 | 3 |
| 13 | 2 | 3 |
| 14 | 2 | 3 |
| 15 | 2 | 3 |
| 16 | 2 | 4 |
| 18 | 2 | 5 |
| 20 | 2 | 5 |
| 21 | 2 | 5 |

In this case the process according to the invention results in a stable SE of two different emulsified concentrates and a suspended sulfonylures, wherein there are 2 mL of oil bleeding at day 5, but this separation remains constant. However, if the SU is milled separately, this leads to a formulation, that still being acceptable, shows an increase of bleeding over time at accelerated storage test (3 weeks at 54 °C in this case).

### Example 3

The addition of suspending agents to suspension concentrates of SUs is not a definitive factor to obtain an stable concentrate, not even when using a small particle size of crystal of 1 to 5 µm.

The formulations 3.1 to 3.3 were performed by simple mixing of all ingredients and subsequent milling under the same conditions of Example 1 to a crystal size of 2.7 µm.

Formulation 3.1 is conforming the present invention, since all necessary features are embodied by the respective components. However, compositions 3.2 and 3.3 do not belong to the scope of protection of the present invention since they fail to have the appropriate oil soluble dispersants (3.3) and/or the castor oil ethoxylated and/or propoxylated (3.2 and 3.3).

Note that the compositions 3.2 and 3.3, previously tested by the inventors (results not shown) at the same level of Bentonite suspending agent (Bentone^{®} 34) than that present in 3.1, showed a

**TOTAL COMPOSITION 3.1**

| **Components** | **wt-%** |
|---|---|
| Metsulfuron + Thifensulfuron 1:1 wt.-% | 3.4 |
| Fluroxypyr | 15.0 |
| Solvesso^{®} 150 | 49.2 |
| Isopar^{®} M | 3.4 |
| Atlox^{®} LP1 | 0.5 |
| Atlox^{®} 4914 | 0.8 |
| Arlamol^{®} E | 1.0 |
| Brij^{®} 98 | 0.4 |
| Brij^{®} 721 | 0.2 |
| Emulsogen^{®} EL 540 | 3.3 |
| Alkamuls^{®} VO/2003 | 12.8 |
| Calsogen^{®} 4814 | 5.4 |
| Arlatone^{®} T | 4.2 |
| Bentone^{®} 34 | 0.4 |
| Rhodosil^{®} 454 | 0.1 |
| **SUM** Final Formulation | 100.0 |

**TOTAL COMPOSITION 3.2**

| **Components** | **wt-%** |
|---|---|
| Metsulfuron + Thifensulfuron 1:1 wt.-% | 2.9 |
| Fluroxypyr | 15.0 |
| Solvesso^{®} 150 | 48.4 |
| Isopar^{®} M | 2.9 |
| Atlox^{®} LP-1 | 0.4 |
| PVP K-15 | 0.7 |
| Arlamol^{®} E | 0.8 |
| Brij^{®} 98 | 0.3 |
| Brij^{®} 721 | 0.2 |
| Genapol^{®} LA 070 | 3.3 |
| Genapol^{®} O 100 | 13.8 |
| Terwet^{®} 220 | 5.3 |
| Arlatone^{®} T | 3.4 |
| Bentone^{®} 34 | 2.5 |
| Rhodosil^{®} 454 | 0.3 |
| **SUM** Final Formulation | 100.0 |

**TOTAL COMPOSITION 3.3**

| **Components** | **wt-%** |
|---|---|
| Metsulfuron + Thifensulfuron 1:1 wt.-% | 2.9 |
| Fluroxypyr | 13.8 |
| Solvesso^{®} 150 | 44.6 |
| Isopar^{®} M | 2.9 |
| Silicon dioxide micronized | 0.4 |
| PVP K-15 | 0.7 |
| Arlamol^{®} E | 0.8 |
| Brij^{®} 98 | 0.3 |
| Brij^{®} 721 | 0.2 |
| Genapol^{®} LA 070 | 3.3 |
| Genapol^{®} O 100 | 15.0 |
| Terwet^{®} 220 | 5.4 |
| Arlatone^{®} T | 3.4 |
| Bentone^{®} 34 | 6.0 |
| Rhodosil^{®} 454 | 0.3 |
| **SUM** Final Formulation | 100.0 |

The three formulations 3.1 to 3.3 were subjected to stability testing and physicochemical properties.

| **Parameter** | **Unit** | **Method of Analysis** | **FORMULATION RESULTS** | | |
|---|---|---|---|---|---|
| | | | **3.1** | **3.2** | **3.3** |
| Particle size, D (v, 0.5) | µm | CIPAC MT 187 | 2.9 | 3.7 | 4.8 |
| Particle size, D (v, 0.9) | µm | CIPAC MT 187 | 9.3 | 12.2 | 18.3 |
| Persistent foam _{(after 1 minute)} | mL | CIPAC MT 47.2 | 0 | 0 | 0 |
| Pourability | % | CIPAC MT 148.1 | 3 | 12 | 14 |
| Viscosity D = 20/s _{(20 °C)} | mPa*s | DIN 53019 | | | |
| Viscosity D = 100/s _{(20 °C)} | mPa*s | DIN 53019 | | | |
| Wet sieve residue _{(45 µm)} | % | CIPAC MT 185 | 0.08 | 1.9 | 3.3 |
| Dispersion stability | | CIPAC MT 180 | | | |
| initial emulsification | | | | | |
| after 0.5 h (cream) | mL | | 0 | 0 | 1 |
| after 0.5 h (oil) | mL | | 0 | 0.5 | 0 |
| after 0.5 h (sediment) | mL | | 0 | 0 | 0 |
| re-emulsification after 24 h | - | | | | |
| after 24.5 h (cream) | mL | | 0 | 1 2 | 2 |
| after 24.5 h (oil) | mL | | 0 | 0.5 | 0.5 |
| after 24.5 h (sediment) | mL | | 0 | 0 | 0 |
| Bleeding | mL | In 250 mL - 3 wk 54°C | 1 | 12 | 9 |

The first evident result that excessive amounts of the suspending agent, that result in a very high viscosity, do not prevent the prevent the bleeding problem addressed by the present invention. It is thus not predictable that the use of a very effective suspending agent (as modified Bentonite clays) will improve the bleeding, and of course this does not solve this frequent problem of the suspension concentrates and suspoemulsions.

The disappearance from the formulation -proposed in the present invention as best alternative for suspoemulsions containing SUs and Fluroxypyr (extended also for other partners to SUs)- of the necessary castor oil type of surfactant and the necessary dispersant soluble in oil block copolymer leads to an unacceptable emulsification and bleeding properties.

On the other hand, in order to try to replace the very effective mixture of components according to the present invention with what the skilled in the art would try at first (increase suspending agents to avoid bleeding) leads to unacceptable levels of pourability (the higher the value, the more remains in the packaging material).

Further, and this is due to lack of appropriate emulsifier -confirmed by tests not shown herein, that have been done at constant levels of Bentonite-, the wet sieving residue of the formulations not according to the invention are absolutely unacceptable for commercial use. The wet sieving residue is a very accurate predictive value of risk of nozzle-blocking (this means that with typical nozzles of 50 µm, formulations 3.2 and 3.3 will surely block after 50-100 L of spray, also very likely to block nozzles of 250 µm for large volumes of application, case usual in extensive farming.

It is observed as well that the emulsification of the oil phase that contains the Fluroxypyr is affected due to lack of more appropriate surfactants.

### Example 4

In the present example we compare two prior art solutions to stable SU suspension concentrates that we consider to represent the state of the art and representative of the best suspension concentrates that may be found in the market. The present example is not however any comparative example of the goodness of the commercial products of the companies mentioned below: this is just a comparison of the preferred embodiments shown in the patents referenced.

The formulation 4.1 is performed according to the present invention.

The formulation 4.2 is performed according to US-A 2003/0176284 (Bayer)

The formulation 4.3 is performed according to EP-B 420497 (Du Pont)

In all cases, the known in the art formulations had to be adapted to a single amount of SU, and therefore changes in the other coformulants have been done according what the skilled in the art would have done to modify the examples and still fall in the scope of the three aforementioned patents.

**FORMULATION 4.1 according to the present invention**

| **Components** | **wt-%** |
|---|---|
| Metsulfuron + Thifensulfuron 1:1 wt.-% | 5.0 |
| Solvesso^{®} 150 | 50.2 |
| Isopar^{®} M | 11.3 |
| Atlox^{®} LP1 | 0.5 |
| Atlox^{®} 4914 | 0.8 |
| Arlamol^{®} E | 2.0 |
| Brij^{®} 98 | 2.4 |
| Brij^{®} 721 | 1.6 |
| Emulsogen^{®} EL 540 | 3.3 |
| Alkamuls^{®} VO/2003 | 12.8 |
| Calsogen^{®} 4814 | 5.4 |
| Arlatone^{®} T | 4.2 |
| Bentone^{®} 34 | 0.4 |
| Rhodosil^{®} 454 | 0.1 |
| **SUM** Final Formulation | 100.0 |

**FORMULATION 4.2 adapted from US 2003/0176248 A1 - Example A c) pg. 16**

| **Components** | **wt**-% |
|---|---|
| Metsulfuron + Thifensulfuron 1:1 wt.-% | 5.0 |
| Isopar M | 86.0 |
| Alkylphenolpolyglycol ether Triton^{®} X 207 | 6.0 |
| Isotridecanolpolyglycol ether 8 mols EO | 3.0 |
| **SUM** Final Formulation | 100.0 |

**FORMULATION 4.3 adapted from EP 420897 B1 - Example 25 pg. 11**

| **Components** | **wt-%** |
|---|---|
| Metsulfuron + Thifensulfuron 1:1 wt.-% | 5.0 |
| Corn oil | 76.2 |
| Bentone^{®} SD-1 | 3.1 |
| PVME | 13.4 |
| Water | 7.3 |
| **SUM** Final Formulation | 100.0 |

The formulation 4.1, 4.2 and 4.3 were milled with all the components together to reach a particle size of 4.3, 4.1 and 3.9 µm respectively.

The formulation 4.1 according to the invention showed no oil/creaming in the 2 hours test after emulsification of 5% of the formulation in 250 mL water in a measuring cylinder. However, 4.2 showed 3 mL creaming, while 4.3 showed 2.7 mL creaming.

An stability test of the physical properties of the formulation was done by storage for 2 weeks at 54 °C. 4.1 passed all FAO tests as specified in the sheet of Example 3, while 4.2 and 4.3 failed to achieve an appropriate wet sieving residue (>0.1 %). Formulation 4.1 did not showed any bleeding, while 4.2 and 4.3 showed bleeding > 5 mL.

The chemical stability of the SU was not satisfactory (degradation more than 5% of the initial quantity) in example 4.3, apparently due to the presence of water.

### Example 5

In this Example different embodiments of the invention are shown (5.1.A, 5.2.A. and 5.3 to 5.12; see Table 1).

Formulations 5.1.B and 5.2.B do not belong to the formulations according the present invention,

The formulations 5.1.A, 5.1.B, 5.2.A and 5.2.B were subjected to the stability tests referred in Example 3 and microscopic observation. For the sake of conciseness, only the most relevant results for each sample shall be mentioned herein.

### 5.1 Test

The differences among 5.1.A and 5.1.B are in the presence in the former of the oil soluble dispersants and the fatty alcohol ethoxylates of the invention, while in 5.1.B the oil dispersant used to disperse the SU has been replaced by a quaternary dispersing agent (Dispersogen^{®} SPS) and the fatty alcohol ethoxylates have been eliminated and replaced with sorbitan derivatives.

The results concerning the emulsification test show that, while 5.1.A does not separate oil after 2 hours, 5.2.B separates 3 mL cream. Further, after 24 hours 5.1.B shows, by microscopical observation, flocculated crystals of Metsulfuron-methyl at the bottom of the cylinder.

### 5.2 Test

The differences among 5.2.A and 5.2.B are in the presence in the former of the oil soluble dispersants and the fatty alcohol ethoxylates of the invention, while in 5.2.B the and the fatty alcohol ethoxylates have been eliminated and replaced predominantly with alkyl polyglucosides (Terwet^{®} 3001) and sorbitan derivatives to complement the surfactant activity in a logical way.

In the emulsification test, after 2 hours an oil phase of 5 mL separates in 5.2.B, containing (by GC-FID analysis) 17 % of Fluroxypyr in such separated layer. Further, the separation of the oil phase was irreversible, not being possible to reemulsify it after 24 hours. Further, after storage during 14 days at 54 °C, formulation 5.2.B presented a wet sieve residue of 4.9 %, while formulation 5.2.A presented a wet sieve residue < 0.1%.

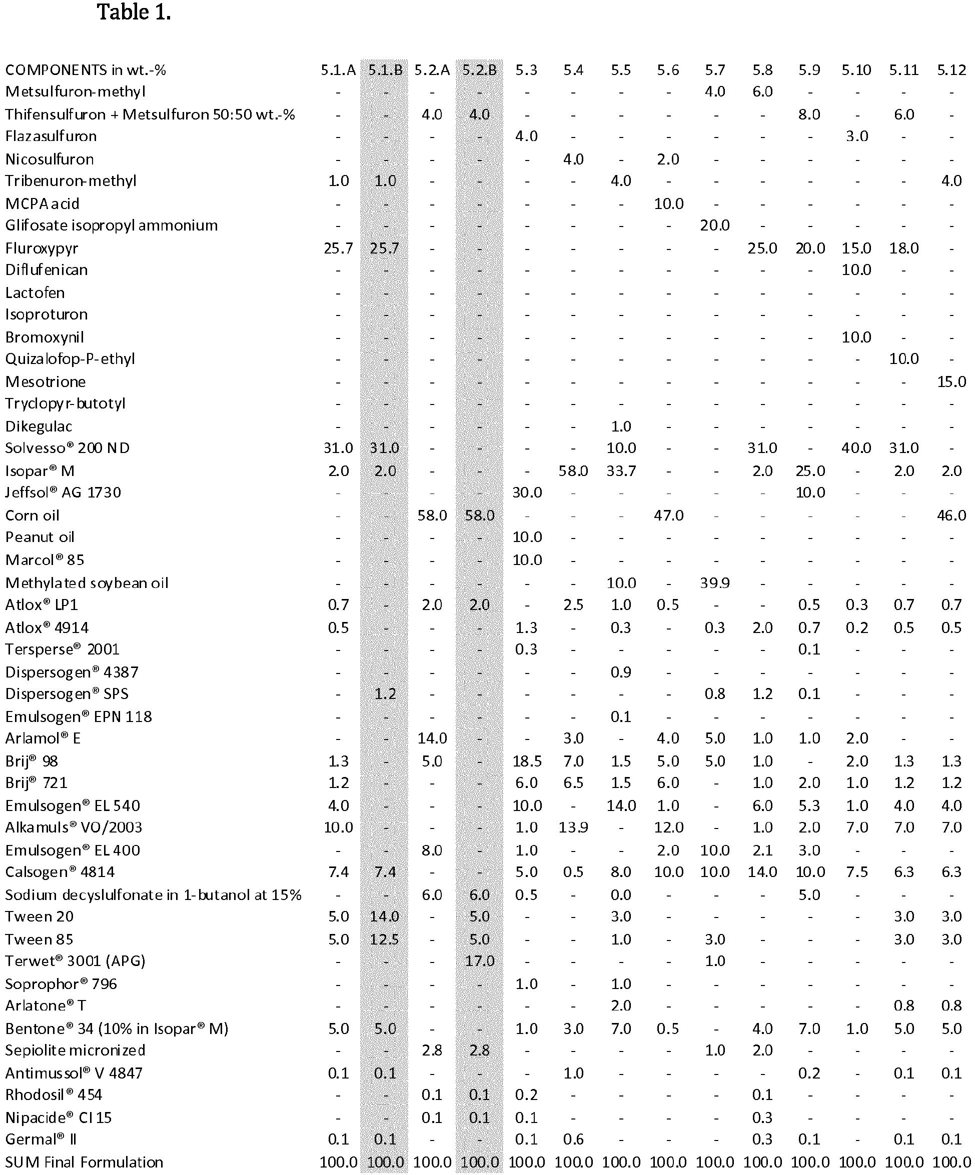

### Example 6.

In this example has been tested the biological efficacy of the formulation 6.1 below explained against the use of the same active ingredients in formulations state of the art.

**TOTAL COMPOSITION 6.1**

| **Components** | **wt-%** |
|---|---|
| Nicosulfuron | 4.0 |
| Fluroxypyr | 18.0 |
| Solvesso^{®} 150 | 47.2 |
| Isopar^{®} M | 5.9 |
| Atlox^{®} LP1 | 0.5 |
| Atlox^{®} 4914 | 0.8 |
| Arlamol^{®} E | 1.0 |
| Brij^{®} 98 | 0.4 |
| Brij^{®} 721 | 0.2 |
| Emulsogen^{®} EL 540 | 3.3 |
| Alkamuls^{®} VO/2003 | 12.8 |
| Calsogen^{®} 4814 | 5.4 |
| Bentone^{®} 34 | 0.4 |
| Rhodosil^{®} 454 | 0.1 |
| **SUM** Final Formulation | 100.0 |

It was performed a mix of the commercial composition of Fluroxypyr 180 g/L Starane^{®} (Dow) and Nicosulfuron 4 g/L Motivell^{®} (BASF) in the water to be sprayed, in such a way that the final watery composition to be sprayed was composed of 0.001 wt.-% Nicosulfuron and 0.020 wt.-% Fluroxypyr, at a dosage equivalent of 1 1/ha. This composition is spray mix 6.2. An equivalent spray mix with the same dosage was done for the formulation 6.1, yielding spray mix 6.1.

The Figure 2 shows the particle size distribution of this formulation, that is in general the typical pattern for the formulations according the present invention.

Both spray mixes 6.1 and 6.2 were sepparately applied to *Gallium aparine* at a stage of 7 true leaves in glasshouse, wherein the control of Nicosulfuron and Fluroxypyr either separately or in combination is difficult. It was also applied in another trial to Echinochloa crus-galli at a stage of 8 true leaves.

Results show in percentage the level of control after 7 days after a single application:

| | Gallium aparine | Echinochloa crus-galli |
|---|---|---|
| Control of 6.1 | 100% | 100% |
| Control of 6.2 | 63% | 42% |

24 hours. Further, after storage during 14 days at 54 °C, formulation 5.2.B presented a wet sieve residue of 4.9 %, while formulation 5.2.A presented a wet sieve residue < 0.1%.

**Table 1.**

| COMPONENTS in wt.-% | 5.1.A | 5.1.B | 5.2.A | 5.2.B | 5.3 | 5.4 | 5.5 | 5.6 | 5.7 | 5.8 | 5.9 | 5.10 | 5.11 | 5.12 |
|---|---|---|---|---|---|---|---|---|---|---|---|---|---|---|
| Metsulfuron-methyl | - | - | - | - | - | - | - | - | 4.0 | 6.0 | - | - | - | - |
| Thifensulfuron + Metsulfuron 50:50 wt.-% | - | - | 4.0 | 4.0 | - | - | - | - | - | - | 8.0 | - | 6.0 | - |
| Flazasulfuron | - | - | - | - | 4.0 | - | - | - | - | - | - | 3.0 | - | - |
| Nicosulfuron | - | - | - | - | - | 4.0 | - | 2.0 | - | - | - | - | - | - |
| Tribenuron-methyl | 1.0 | 1.0 | - | - | - | - | 4.0 | - | - | - | - | - | - | 4.0 |
| MCPAacid | - | - | - | - | - | - | - | 10.0 | - | - | - | - | - | - |
| Glifosate isopropyl ammonium | - | - | - | - | - | - | - | - | 20.0 | - | - | - | - | - |
| Fluroxypyr | 25.7 | 25.7 | - | - | - | - | - | - | - | 25.0 | 20.0 | 15.0 | 18.0 | - |
| Diflufenican | - | - | - | - | - | - | - | - | - | - | - | 10.0 | - | - |
| Lactofen | - | - | - | - | - | - | - | - | - | - | - | - | - | - |
| Isoproturon | - | - | - | - | - | - | - | - | - | - | - | - | - | - |
| Bromoxynil | - | - | - | - | - | - | - | - | - | - | - | 10.0 | - | - |
| Quizalofop-P-ethyl | - | - | - | - | - | - | - | - | - | - | - | - | 10.0 | - |
| Mesotrione | - | - | - | - | - | - | - | - | - | - | - | - | - | 15.0 |
| Trydopyr-butotyl | - | - | - | - | - | - | - | - | - | - | - | - | - | - |
| Dikegulac | - | - | - | - | - | - | 1.0 | - | - | - | - | - | - | - |
| Solvesso®200 ND | 31.0 | 31.0 | - | - | - | - | 10.0 | - | - | 31.0 | - | 40.0 | 31.0 | - |
| Isopar®M | 2.0 | 2.0 | - | - | - | 58.0 | 33.7 | - | - | 2.0 | 25.0 | - | 2.0 | 2.0 |
| Jeffsol®AG 1730 | - | - | - | - | 30.0 | - | - | - | - | - | 10.0 | - | - | - |
| Cornoil | - | - | 58.0 | 58.0 | - | - | - | 47.0 | - | - | - | - | - | 46,0 |
| Peanut oil | - | - | - | - | 10.0 | - | - | - | - | - | - | - | - | - |
| Marcol®85 | - | - | - | - | 10.0 | - | - | - | - | - | - | - | - | - |
| Methylated soybean oil | - | - | - | - | - | - | 10.0 | - | 39.9 | - | - | - | - | - |
| Atlox®LP1 | 0.7 | - | 2.0 | 2.0 | - | 2.5 | 1.0 | 0.5 | - | - | 0.5 | 0.3 | 0.7 | 0.7 |
| Atlox®4914 | 0.5 | - | - | - | 1.3 | - | 0.3 | - | 0.3 | 20 | 0.7 | 0.2 | 0.5 | 0.5 |
| Tersperse®2001 | - | - | - | - | 0.3 | - | - | - | - | - | 0.1 | - | - | - |
| Dispersogen®4387 | - | - | - | - | - | - | 0.9 | - | - | - | - | - | - | - |
| Dispersogen®SPS | - | 1.2 | - | - | - | - | - | - | 0.8 | 1.2 | 0.1 | - | - | - |
| Emulsogen®EPN 118 | - | - | - | - | - | - | 0.1 | - | - | - | - | - | - | - |
| Arlamol®E | - | - | 14.0 | - | - | 3.0 | - | 4.0 | 5.0 | 1.0 | 1.0 | 2.0 | - | - |
| Brim®98 | 1.3 | - | 5.0 | - | 18.5 | 7.0 | 1.5 | 5.0 | 5.0 | 1.0 | - | 2.0 | 1.3 | 1.3 |
| Brij®721 | 1.2 | - | - | - | 6.0 | 6.5 | 1.5 | 6.0 | - | 1.0 | 2.0 | 1.0 | 1.2 | 1.2 |
| Emulsogen®EL540 | 4.0 | - | - | - | 10.0 | - | 14.0 | 1.0 | - | 6.0 | 5.3 | 1.0 | 4.0 | 4.0 |
| Alkamuls®VO/2003 | 10.0 | - | - | - | 1.0 | 13.9 | - | 12.0 | - | 1.0 | 2.0 | 7.0 | 7.0 | 7.0 |
| Emulsogen®EL400 | - | - | 8.0 | - | 1.0 | - | - | 2.0 | 10.0 | 21 | 3.0 | - | - | - |
| Calsogen®4814 | 7.4 | 7.4 | - | - | 5.0 | 0.5 | 8.0 | 10.0 | 10.0 | 14.0 | 10.0 | 7.5 | 6.3 | 6.3 |
| Sbdium decysilulfonate in 1-butanol at 15% | - | - | 6.0 | 6.0 | 0.5 | - | 0.0 | - | - | - | 5.0 | - | - | - |
| Tween 20 | 5.0 | 14.0 | - | 5.0 | - | - | 3.0 | - | - | - | - | - | 3.0 | 3.0 |
| Tween 85 | 5.0 | 12.5 | - | 5.0 | - | - | 1.0 | - | 3.0 | - | - | - | 3.0 | 3.0 |
| Terwet®3001 (APG) | - | - | - | 17.0 | - | - | - | - | 1.0 | - | - | - | - | - |
| Soprophor®796 | - | - | - | - | 1.0 | - | 1.0 | - | - | - | - | - | - | - |
| Arlatone®T | - | - | - | - | - | - | 20 | - | - | - | - | - | 0.8 | 0.8 |
| Bentone®34 (10% in Isopar®M ) | 5.0 | 5.0 | - | - | 1.0 | 3.0 | 7.0 | 0.5 | - | 4.0 | 7.0 | 1.0 | 5.0 | 5.0 |
| Sepiolite micronized | - | - | 2.8 | 28 | - | - | - | - | 1.0 | 2.0 | - | - | - | - |

### Example 6.

In this example has been tested the biological efficacy of the formulation 6.1 below explained against the use of the same active ingredients in formulations state of the art.

**TOTAL COMPOSITION 6.1**

| **Components** | **wt-%** |
|---|---|
| Nicosulfuron | 4.0 |
| Fluroxypyr | 18.0 |
| Solvesso^{®} 150 | 47.2 |
| Isopar^{®} M | 5.9 |
| Atlox^{®} LP1 | 0.5 |
| Atlox^{®} 4914 | 0.8 |
| Arlamol^{®} E | 1.0 |
| Brij^{®} 98 | 0.4 |
| Brij^{®} 721 | 0.2 |
| Emulsogen^{®} EL 540 | 3.3 |
| Alkamuls^{®} VO/2003 | 12.8 |
| Calsogen^{®} 4814 | 5.4 |
| Bentone^{®} 34 | 0.4 |
| Rhodosil^{®} 454 | 0.1 |
| **SUM** Final Formulation | 100.0 |

It was performed a mix of the commercial composition of Fluroxypyr 180 g/L Starane^{®} (Dow) and Nicosulfuron 4 g/L Motivell^{®} (BASF) in the water to be sprayed, in such a way that the final watery composition to be sprayed was composed of 0.001 wt.-% Nicosulfuron and 0.020 wt.-% Fluroxypyr, at a dosage equivalent of 1 1/ha. This composition is spray mix 6.2. An equivalent spray mix with the same dosage was done for the formulation 6.1, yielding spray mix 6.1.

The Figure 2 shows the particle size distribution of this formulation, that is in general the typical pattern for the formulations according the present invention.

Both spray mixes 6.1 and 6.2 were sepparately applied to *Gallium aparine* at a stage of 7 true leaves in glasshouse, wherein the control of Nicosulfuron and Fluroxypyr either separately or in combination is difficult. It was also applied in another trial to Echinochloa crus-galli at a stage of 8 true leaves.

Results show in percentage the level of control after 7 days after a single application:

| | Gallium aparine | Echinochloa crus-galli |
|---|---|---|
| Control of 6.1 | 100% | 100% |
| Control of 6.2 | 63% | 42% |

## Claims

1. Process of preparing a suspoemulsion, containing at least a suspended sulfonylurea in oil and at least one active ingredient soluble in such oil, consisting on the steps of:
a. Preparing a Premix 1 consisting in at least in one active ingredient that is dissolved in at least one oil
b. Preparing a Premix 2 consisting in at least two non-ionic surfactants, respectively a fatty alcohol ethoxylated and/or propoxylated and a castor oil ethoxylated and/or propoxylated, that are dispersed or solubilized in an oil
c. Preparing a Premix 3 consisting in at least one secondary active ingredient being this a sulfonylurea herbicide that is dispersed in an oil with the aid of an oil-soluble dispersant of the type non-ionic block copolymer ethoxylated and/or propoxylated and/or a condensed fatty acid ethoxylated and/or propoxylated
d. Preparing a Premix 4 consisting in at least a suspending agent dispersed in an oil and at least one ionic surfactant of the type alkylbenzenesulfonate salt
e. According to the desired final concentration on the active ingredients, an aliquot of each Premix is taken.
f. The mix of Premixes is subjected to a milling process in order to reduce the particle size of the crystals (as an average) of 1 to 15 µm.
g. The product is finally cooled down to room temperature naturally and ready for packing.

2. Process according to claim 1 **characterized in that** the oil soluble herbicide is selected from the group: Fluroxypyr, Tryclopyr-butotyl, Picocloram, Clopyralid, Metosulam, Diflufenican, Isoproturon, Ioxynil, Bromoxynil, Mecoprop-P, Dichlorprop, Dicamba, MCPA, Bifenox, Carfentrazone-ethyl, 2,4-D, Lactofen, Mesotrione, Sulcotrione, Isoxaflutole, Quizalofop-P-ethyl, Fluazifop-P-butyl, in all their stereoisomeric forms and degrees of alkylation and the sulfonylurea is selected from the group Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flucarbazone, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Propoxycarbazone, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron; and salts, ethers, esters thereof, in all their stereoisomeric forms.

3. Suspension of herbicidal sulfonylureas produced according claim 1 **characterized in that** it comprises:
a. at least a herbicidal sulfonylurea
b. an oil or mixture of oils; wherein the sulfonylurea solubility is less than 10 g/kg
c. at least a dispersant soluble in oil of the type non-ionic block copolymer or polycondensed fatty acid at 0.1 to 10 wt.-%
d. at least two non-ionic surfactants of the type C12-C20 alcohol ethoxylated and/or propoxylated at 1 to 40 wt.-% and of the type castor oil ethoxylated at 1 to 40 wt.-%
e. at least one ionic emulsifier of the type C6-C18 alkyl benzenesulfonic acid, or alkaline and/or earth alkaline salts thereof at 1 to 35 wt.-%
f. at least a suspending agent at 0.01 to 10 %.

4. Suspension of herbicidal sulfonylureas according to claim 3 **characterized in that** the mixture of oils consists in:
g. a mixture of naphtha heavy solvent and isoparaffinic oil; or
h. a mixture of paraffinic oil and natural vegetable oil or an hydrogenated or epoxidized or alkylated or saponified vegetable oil.

5. Suspension of herbicidal sulfonylureas according to claim 3 **characterized in that** it contains a natural vegetable oil or an hydrogenated or epoxidized or alkylated or saponified vegetable oil.

6. Suspension of herbicidal sulfonylureas according to claim 3 **characterized in that** the no-ionic block copolymer mentioned in claim 3 c correspond to the molecules with CAS No. 548475-72-5.

7. Suspension of herbicidal sulfonylureas according to claim 3 **characterized in that** the additional dispersant soluble in oil of 3 c corresponds to the molecules with CAS No. 173717-47-0.

8. Suspension of herbicidal sulfonylureas according to claim 3 **characterized in that** at least one emulsifier is a fatty alcohol 2 to 45 mols propoxylated and/or ethoxylated.

9. Suspension of herbicidal sulfonylureas according to claim 3 **characterized in that** at least one emulsifier present is stearyl alcohol 15 mols propoxylated.

10. Suspension of herbicidal sulfonylureas according to claim 3 **characterized in that** further exists at least another non-ionic surfactant.

11. Suspension of herbicidal sulfonylureas according to claim 10 **characterized in that** it is further present at least a sorbitan derivative surfactant.

12. Suspension of herbicidal sulfonylureas according to claim 3 **characterized in that** it is present a castor oil is 32-54 mols ethoxylated

13. Suspension of herbicidal sulfonylureas according to claim 3 **characterized in that** the suspending agent is of the type of organomodified Bentonite.

14. Suspension of herbicidal sulfonylureas according to claim 3 **characterized in that** there are further present coformulants and adjuvants for agriculture and/or other suspended or dissolved or emulsified biologically active agrochemical compounds selected from the group of herbicides, herbicide's safeners, fungicides, bactericides, insecticides, insect antifeedants, pheromones, acaricides, miticides, nematocides, plant growth regulators and organic or inorganic foliar fertilizers.

15. Suspension of herbicidal sulfonylureas according to claim 3 **characterized in that** the additional suspended herbicide is a salt of glyfosate, sulfosate, MCPA , 2,4-D, 2,3,6-TBA salts; or paraquat and diquat dichloride or dibromide.

16. Suspension of herbicidal sulfonylureas according to claim 3 **characterized in that** the additional herbicide present in the formulation and dissolved in the oil(s) is Fluroxypyr, forming a suspoemulsion of suspended sulfonylurea(s) and emulsion concentrate of Fluroxypyr.

17. Suspension of herbicidal sulfonylureas according to claim 16 **characterized in that** the sulfonylurea combined with Fluroxypyr is selected from at least one sulfonylurea of the group: Metsulfuron, Thifensulfuron or salts or ethers or esters thereof.

18. Suspension of herbicidal sulfonylureas according to claim 16 **characterized in that** the sulfonylurea combined with Fluroxypyr is Tribenuron or salts or ethers or esters thereof.

19. Suspension of herbicidal sulfonylureas according to claim 16 **characterized in that** the sulfonylurea combined with Fluroxypyr is Thifensulfuron or salts or ethers or esters thereof.

20. Suspension of herbicidal sulfonylureas according to claim 16 **characterized in that** the sulfonylurea combined with Fluroxypyr is Rimsulfuron or salts or ethers or esters thereof.

21. Suspension of herbicidal sulfonylureas according to claim 16 **characterized in that** the sulfonylurea combined with Fluroxypyr is Nicosulfuron or salts or ethers or esters thereof.

22. Use of the suspoemulsion produced according to claim 1 of at least one sulfonylurea and Fluroxypyr for the control in cereal crops of the weeds: *Gallium aparine, Rumex acetosa, Rumex crispus, Rumex obtusifolius, Kochia spp., Urdica dioica, Calystegia sepium, Convulvulus spp., Convulvulus arvensis, Solanum nigrum, Bilderkydia convolvulus, Cerastium arvense, Galeopsis tetrahit, Lamium amplexicaule, Malva sylvestris, Mysotis arventis, Parietaria spp., Sinapsis arvensis, Spergula arvensis, Stellaria media, Cytisus scoparius, Epilobium angustifolium, Ulex spp., Abutilum theophasti, Adonis spp., Agrostemma githago, Amaranthus spp., Arenaria spp., Bilderdykia convolvulus, Capsella bursa-pastoris, Chenopodium album, Datura stramonium, Diplotaxis erucoides, Lamium amplexicaule, Lithospermum arvense, Myosotis palustris, Papaver rhoeas, Polygonum aviculare, Portulaca oleracea, Raphanus raphanistrum, Silene spp., Sisymbrium orientalis, Veronica persica, Xantium spinosum, Adonis aestivalis, Anthemis arvensis, Buglossoides arvensi, Chamomilla recutita, Chenopodium album, Diplotaxis erucoides, Papaverrhoeas, Ridolphia saegetum, Salsola kali, Sisymbrium orientalis, Vaccaria segetum, Anagallis arvensis, Cirsium arvense, Fumaria officinalis, Hypecoum procumbens, Veronica hederifolia, Sorghum halepense, Avena sterilis, Echinochloa spp.* and specially *Echinochloa crus-galli, Lolium rigidum, Panicum miliaceum, Setaria verticillata ,Setaria viridis, Digitaria sanguinalis, Abutilon theophrasti, Amaranthus blitoides, Amaranthus retroflexus, Artemisia spp., Coronopus spp., Sorgum halepense, Diplotaxis spp., Eruca vesicaria, Helianthus annus, Portulaca oleracea, Reseda spp., Sonchus spp., Xanthium strumarium.*

## Patentansprüche

1. Verfahren zum Herstellen einer Suspoemulsion, die mindestens einen suspendierten Sulfonylharnstoff in Öl und mindestens einen aktiven Bestandteil enthält, der in derartigem Öl löslich ist, bestehend aus den Schritten:
a. Herstellen einer Vormischung, die aus mindestens einem aktiven Bestandteil besteht, der in mindestens einem Öl gelöst ist,
b. Herstellen einer Vormischung 2, die aus mindestens zwei nichtionischen Tensiden besteht, einem ethoxylierten und/oder propoxylierten Fettalkohol beziehungsweise einem ethoxylierten und/oder propoxylierten Castoröl, die in einem Öl dispergiert oder solubilisiert sind,
c. Herstellen einer Vormischung 3, die mindestens aus einem sekundären aktiven Bestandteil besteht, bei dem es sich um ein Sulfonylharnstoff-Herbizid handelt, das in einem Öl mithilfe eines öllöslichen Dispergiermittels vom Typ ethoxyliertes und/oder propoxyliertes nichtionisches Blockcopolymer und/oder ethoxylierte und/oder propoxylierte kondensierte Fettsäure dispergiert ist,
d. Herstellen einer Vormischung 4, die aus mindestens einem in einem Öl dispergierten Suspendiermittel und mindestens einem ionischen Tensid vom Typ Alkylbenzolsulfonatsalz besteht,
e. Nehmen einer Aliquote jeder Vormischung gemäß der gewünschten Endkonzentration der aktiven Bestandteile,
f. Unterziehen der Mischung der Vormischungen einem Mahlprozess, um die Partikelgröße der Kristalle (als Durchschnittswert) auf 1 bis 15 µm zu reduzieren,
g. schließlich Abkühlen des Produkts auf Raumtemperatur auf natürliche Weise, wobei dieses dann bereit zum Verpacken ist.

2. Verfahren nach Anspruch 1, **dadurch gekennzeichnet, dass** das öllösliche Herbizid ausgewählt ist aus der Gruppe: Fluroxypyr, Tryclopyrbutotyl, Picocloram, Clopyralid, Metosulam, Diflufenican, Isoproturon, Ioxynil, Bromoxynil, Mecoprop-P, Dichlorprop, Dicamba, MCPA, Bifenox, Carfentrazon-ethyl, 2,4-D, Lactofen, Mesotrion, Sulcotrion, Isoxaflutol, Quizalofop-P-ethyl, Fluazifop-P-butyl in allen ihren stereoisomeren Formen und Alkylierungsgraden, und wobei der Sulfonylharnstoff ausgewählt ist aus der Gruppe Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flucarbazon, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Propoxycarbazon, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron und Salzen, Ethern, Estern davon in allen ihren stereoisomeren Formen.

3. Suspension von herbiziden Sulfonylharnstoffen, die gemäß Anspruch 1 hergestellt ist, **dadurch gekennzeichnet, dass** sie umfasst:
a. mindestens einen herbiziden Sulfonylharnstoff,
b. ein Öl oder eine Mischung von Ölen, wobei die Löslichkeit des Sulfonylharnstoffs weniger als 10 g/kg beträgt,
c. mindestens ein in Öl lösliches Dispergiermittel vom Typ nichtionisches Blockcopolymer oder polykondensierte Fettsäure in 0,1 bis 10 Gew.%,
d. mindestens zwei nichtionische Tenside des Typs ethoxylierter und/oder propoxylierter C₁₂-C₂₀-Alkohol in 1 bis 40 Gew.% und vom Typ ethoxyliertes Castoröl in 1 bis 40 Gew.%,
e. mindestens einen ionischen Emulgator des Typs C₆-C₁₈-Alkylbenzolsulfonsäure oder Alkali- und/oder Erdalkalisalze davon in 1 bis 35 Gew.%,
f. mindestens ein Suspendiermittel in 0,01 bis 10 %.

4. Suspension von herbiziden Sulfonylharnstoffen nach Anspruch 3, **dadurch gekennzeichnet, dass** die Mischung von Ölen besteht aus:
g. einer Mischung von schwerem Naphthalösungsmittel und isoparaffinischem Öl oder
h. einer Mischung aus paraffinischem Öl und natürlichem pflanzlichem Öl oder einem hydrierten oder epoxyierten oder alkylierten oder verseiften pflanzlichen Öl.

5. Suspension von herbiziden Sulfonylharnstoffen nach Anspruch 3, **dadurch gekennzeichnet, dass** sie ein natürliches pflanzliches Öl oder ein hydriertes oder epoxyiertes oder alkyliertes oder verseiftes pflanzliches Öl enthält.

6. Suspension von herbiziden Sulfonylharnstoffen nach Anspruch 3, **dadurch gekennzeichnet, dass** das in Anspruch 3 c genannte nichtionische Blockcopolymer den Molekülen mit CAS Nr. 548475-72-5 entspricht.

7. Suspension von herbiziden Sulfonylharnstoffen nach Anspruch 3, **dadurch gekennzeichnet, dass** zusätzliche öllösliche Dispergiermittel von 3 c den Molekülen mit CAS Nr. 173717-47-0 entspricht.

8. Suspension von herbiziden Sulfonylharnstoffen nach Anspruch 3, **dadurch gekennzeichnet, dass** der mindestens eine Emulgator ein mit 2 bis 45 Mol propoxylierter und/oder ethoxylierter Fettalkohol ist.

9. Suspension von herbiziden Sulfonylharnstoffen nach Anspruch 3, **dadurch gekennzeichnet, dass** der mindestens eine vorhandene Emulgator mit 15 Mol propoxylierter Stearylalkohol ist.

10. Suspension von herbiziden Sulfonylharnstoffen nach Anspruch 3, **dadurch gekennzeichnet, dass** ferner mindestens ein anderes nichtionisches Tensid vorhanden ist.

11. Suspension von herbiziden Sulfonylharnstoffen nach Anspruch 10, **dadurch gekennzeichnet, dass** ferner mindestens ein von Sorbitan abgeleitetes Tensid vorhanden ist.

12. Suspension von herbiziden Sulfonylharnstoffen nach Anspruch 3, **dadurch gekennzeichnet, dass** ein mit 32-54 Mol ethoxyliertes Castoröl vorhanden ist.

13. Suspension von herbiziden Sulfonylharnstoffen nach Anspruch 3, **dadurch gekennzeichnet, dass** das Suspendiermittel vom Typ organomodifiziertes Bentonit ist.

14. Suspension von herbiziden Sulfonylharnstoffen nach Anspruch 3, **dadurch gekennzeichnet, dass** ferner Coformulierungsmittel und Adjuvantien für die Landwirtschaft vorhanden sind und/oder andere suspendierte oder gelöste oder emulgierte biologisch aktive agrochemische Verbindungen ausgewählt aus der Gruppe der Herbizide, Herbizid-Safener, Fungizide, Bakterizide, Insektizide, Antifraßstoffe für Insekten, Pheromone, Akarizide, Mitizide, Nematozide, Pflanzenwachstumsregulatoren und organischen oder anorganischen Blätterdüngemittel.

15. Suspension von herbiziden Sulfonylharnstoffen nach Anspruch 3, **dadurch gekennzeichnet, dass** das zusätzliche suspendierte Herbizid ein Salz von Glyphosat, Sulfosat, MCPA, 2,4-D, 2,3,6-TBA-Salze; oder Paraquat- und Diquatdichlorid oder -dibromid ist.

16. Suspension von herbiziden Sulfonylharnstoffen nach Anspruch 3, **dadurch gekennzeichnet, dass** das in der Formulierung vorhandene und in dem Öl/den Ölen gelöste zusätzliche Herbizid Fluroxypyr ist, wobei eine Suspoemulsion von suspendiertem Sulfonylharnstoff/suspendierten Sulfonylharnstoffen und Emulsionskonzentrat von Fluroxypyr gebildet wird.

17. Suspension von herbiziden Sulfonylharnstoffen nach Anspruch 16, **dadurch gekennzeichnet, dass** der Sulfonylharnstoff in Kombination mit Fluroxypyr ausgewählt ist aus mindestens einem Sulfonylharnstoff der Gruppe:
Metsulfuron, Thifensulfuron oder Salzen oder Ethern oder Estern davon.

18. Suspension von herbiziden Sulfonylharnstoffen nach Anspruch 16, **dadurch gekennzeichnet, dass** der Sulfonylharnstoff in Kombination mit Fluroxypyr Tribenuron oder Salze oder Ether oder Ester davon ist.

19. Suspension von herbiziden Sulfonylharnstoffen nach Anspruch 16, **dadurch gekennzeichnet, dass** der Sulfonylharnstoff in Kombination mit Fluroxypyr Thifensulfuron oder Salze oder Ether oder Ester davon ist.

20. Suspension von herbiziden Sulfonylharnstoffen nach Anspruch 16, **dadurch gekennzeichnet, dass** der Sulfonylharnstoff in Kombination mit Fluroxypyr Rimsulfuron oder Salze oder Ether oder Ester davon ist.

21. Suspension von herbiziden Sulfonylharnstoffen nach Anspruch 16, **dadurch gekennzeichnet, dass** der Sulfonylharnstoff in Kombination mit Fluroxypyr Nicosulfuron oder Salze oder Ether oder Ester davon ist.

22. Verwendung der gemäß Anspruch 1 hergestellten Suspoemulsion von mindestens einem Sulfonylharnstoff und Fluroxypyr zur Bekämpfung der folgenden Unkräuter im Getreideanbau: *Gallium aparine, Rumexacetosa, Rumex crispus, Rumex obtusifolius, Kochia spp., Urdica dioica, Calystegia sepium, Convulvulus spp., Convulvulus arvensis, Solanum nigrum, Bilderkydia convolvulus, Cerastium arvense, Galeopsis tetrahit, Lamium amplexicaule, Malva sylvestris, Mysotis arventis, Parietaria spp., Sinapsis arvensis, Spergula arvensis, Stellaria media, Cytisus scoparius, Epilobium angustifolium, Ulex spp., Abutilum theophasti, Adonis spp., Agrostemma githago, Amaranthus spp., Arenaria spp., Bilderdykia convolvulus, Capsella bursa-pastohs, Chenopodium album, Datura stramonium, Diplotaxis erucoides, Lamium amplexicaule, Lithospermum arvense, Myosotis palustris, Papaver rhoeas, Polygonum aviculare, Portulaca oleracea, Raphanus raphanistrum, Silene spp., Sisymbrium orientalis, Veronica persica, Xantium spinosum, Adonis aestivalis, Anthemis arvensis, Buglossoides arvensi, Chamomilla recutita, Chenopodium album, Diplotaxis erucoides, Papaver rhoeas, Ridolphia saegetum, Salsola kali, Sisymbrium orientalis, Vaccaria segetum, Anagallis arvensis, Cirsium arvense, Fumaria officinalis, Hypecoum procumbens, Veronica hederifolia, Sorghum halepense, Avena sterilis, Echinochloa spp.* und insbesondere *Echinochloa crus-galli, Lolium rigidum, Panicum miliaceum, Setaria verticillata, Setaria viridis, Digitaria sanguinalis, Abutilon theophrasti, Amaranthus blitoides, Amaranthus retroflexus, Artemisia spp., Coronopus spp., Sorgum halepense, Diplotaxis spp., Eruca vesicaria, Helianthus annus, Portulaca oleracea, Reseda spp., Sonchus spp., Xanthium strumarium.*

## Revendications

1. Procédé de préparation d'une suspoémulsion, contenant au moins une sulfonylurée suspendue dans de l'huile et au moins un principe actif soluble dans cette huile, comprenant les étapes consistant à :
a. préparer un prémélange 1 se composant d'au moins un principe actif qui est dissous dans au moins une huile
b. préparer un prémélange 2 se composant d'au moins deux tensioactifs non ioniques, respectivement un alcool gras éthoxylé et/ou propoxylé et une huile de ricin éthoxylée et/ou propoxylée, qui sont dispersés ou solubilisés dans une huile
c. préparer un prémélange 3 se composant d'au moins un principe actif secondaire qui est ledit herbicide sulfonylurée qui est dispersé dans une huile à l'aide d'un dispersant soluble dans l'huile du type copolymère séquencé non ionique éthoxylé et/ou propoxylé et/ou acide gras condensé éthoxylé et/ou propoxylé
d. préparer un prémélange 4 se composant d'au moins un agent de suspension dispersé dans une huile et d'au moins un tensioactif ionique du type sel d'alkylbenzènesulfonate
e. en fonction de la concentration finale souhaitée des principes actifs, un échantillon de chaque prémélange est prélevé
f. le mélange des prémélanges est soumis à un procédé de broyage afin de réduire la granulométrie des cristaux (sous forme de moyenne) de 1 à 15 µm
g. le produit est finalement refroidi à température ambiante de manière naturelle et prêt pour son conditionnement.

2. Procédé selon la revendication 1 **caractérisé en ce que** l'herbicide soluble dans l'huile est choisi dans le constitué par : le fluroxypyr, le tryclopyr-butotyle, le picocloram, le clopyralid, le métosulam, le diflufénican, l'isoproturon, l'ioxynil, le bromoxynil, le mécoprop-P, le dichlorprop, le dicamba, le MCPA, le bifénox, le carfentrazone-éthyl, 2,4-D, le lactofène, la mésotrione, la sulcotrione, l'isoxaflutole, le quizalofop-P-éthyle, le fluazifop-P-butyle, sous toutes leurs formes stéréoisomères et tous leurs degrés d'alkylation et la sulfonylurée est choisie dans le groupe constitué par : l'amidosulfuron, l'azimsulfuron, le bensulfuron, le chlorimuron, le chlorsulfuron, le cinosulfuron, le cyclosulfamuron, l'éthametsulfuron, l'éthoxysulfuron, le flazasulfuron, la flucarbazone, le flupyrsulfuron, le foramsulfuron, l'halosulfuron, l'imazosulfuron, l'iodosulfuron, le mésosulfuron, le metsulfuron, le nicosulfuron, l'oxasulfuron, le primisulfuron, la propoxycarbazone, le prosulfuron, le pyrazosulfuron, le rimsulfuron, le sulfométuron, le sulfosulfuron, le thifensulfuron, le triasulfuron, le tribénuron, le trifloxysulfuron, le triflusulfuron, le tritosulfuron ; et leurs sels, éthers et esters, sous toutes leurs formes stéréoisomères.

3. Suspension de sulfonylurées herbicides produits selon la revendication 1, **caractérisée en ce qu'**elle comprend :
a. au moins une sulfonylurée herbicide
b. une huile ou un mélange d'huiles ; dans laquelle la solubilité de la sulfonylurée est inférieure à 10 g/kg
c. au moins une dispersant soluble dans une huile du type copolymère séquencé non ionique ou acide gras polycondensé de l'ordre de 0,1 à 10 % en poids
d. au moins deux tensioactifs non ioniques du type alcool éthoxylé et/ou propoxylé en C12 à C20 de l'ordre de 1 à 40 % en poids et du type huile de ricin éthoxylée de l'ordre de 1 à 40 % en poids
e. au moins un émulsifiant ionique du type acide alkylbenzènesulfonique en C6 à C18, ou des sels alcalins et/ou alcalino-terreux de celui-ci de l'ordre de 1 à 35 % en poids
f. au moins un agent de suspension de l'ordre de 0,01 à 10 %.

4. Suspension de sulfonylurées herbicides selon la revendication 3, **caractérisée en ce que** le mélange d'huiles est constitué de :
g. un mélange de solvant lourd de type naphta et d'huile isoparaffinique ; ou
h. un mélange d'huile paraffinique et d'huile végétale naturelle ou d'huile végétale hydrogénée ou époxydée ou alkylée ou saponifiée.

5. Suspension de sulfonylurées herbicides selon la revendication 3, **caractérisée en ce qu'**elle contient une huile végétale naturelle ou une huile végétale hydrogénée ou époxydée ou alkylée ou saponifiée.

6. Suspension de sulfonylurées herbicides selon la revendication 3, **caractérisée en ce que** le copolymère séquencé non ionique mentionné dans la revendication 3 c correspond aux molécules ayant le N° CAS 548475-72-5.

7. Suspension de sulfonylurées herbicides selon la revendication 3, **caractérisée en ce que** le dispersant supplémentaire soluble dans de l'huile mentionné dans la revendication 3 c correspond aux molécules ayant le N° CAS 173717-47-0.

8. Suspension de sulfonylurées herbicides selon la revendication 3, **caractérisée en ce qu'**au moins un émulsifiant est un alcool gras de 2 à 45 moles propoxylées et/ou éthoxylées.

9. Suspension de sulfonylurées herbicides selon la revendication 3, **caractérisée en ce qu'**au moins un émulsifiant présent est un alcool stéarylique de 15 moles propoxylées.

10. Suspension de sulfonylurées herbicides selon la revendication 3, **caractérisée en ce qu'**il existe en outre au moins un autre tensioactif non ionique.

11. Suspension de sulfonylurées herbicides selon la revendication 10, **caractérisée en ce qu'**elle comprend en outre au moins un tensioactif dérivé du sorbitan.

12. Suspension de sulfonylurées herbicides selon la revendication 3, **caractérisée en ce qu'**elle comprend une huile de ricin de 32-54 moles éthoxylées.

13. Suspension de sulfonylurées herbicides selon la revendication 3, **caractérisée en ce que** l'agent de suspension est du type bentonite organomodifiée.

14. Suspension de sulfonylurées herbicides selon la revendication 3, **caractérisée en ce qu'**elle comprend en outre des agents de co-formulation et des adjuvants pour l'agriculture et/ou d'autres composés agrochimiques biologiquement actifs suspendus ou dissous ou émulsifiés choisis dans le groupe constitué par les herbicides, les agents phytprotecteurs, les fongicides, les bactéricides, les insecticides, les antiappétants pour insectes, les phéromones, les acaricides, les miticides, les nématocides, les régulateurs de croissance végétale et les engrais foliaires organiques ou inorganiques.

15. Suspension de sulfonylurées herbicides selon la revendication 3, **caractérisée en ce que** l'herbicide suspendu supplémentaire est un sel de glyfosate, sulfosate, MCPA, 2,4-D, 2,3,6-TBA ; ou un dichlorure ou dibromure de paraquat et diquat.

16. Suspension de sulfonylurées herbicides selon la revendication 3, **caractérisée en ce que** l'herbicide supplémentaire présent dans la formulation et dissous dans la ou les huiles est le fluroxypyr, formant une suspoémulsion de sulfonylurée(s) suspendue(s) et un concentré d'émulsion de fluroxypyr.

17. Suspension de sulfonylurées herbicides selon la revendication 16, **caractérisée en ce que** la sulfonylurée combinée au fluroxypyr est choisie parmi au moins une sulfonylurée du groupe constitué par : le metsulfuron, le thifensulfuron ou leurs sels ou leurs éthers ou leurs esters.

18. Suspension de sulfonylurées herbicides selon la revendication 16, **caractérisée en ce que** la sulfonylurée combinée au fluroxypyr est le tribénuron ou ses sels ou ses éthers ou ses esters.

19. Suspension de sulfonylurées herbicides selon la revendication 16, **caractérisée en ce que** la sulfonylurée combinée au fluroxypyr est le thifensulfuron ou ses sels ou ses éthers ou ses esters.

20. Suspension de sulfonylurées herbicides selon la revendication 16, **caractérisée en ce que** la sulfonylurée combinée au fluroxypyr est le rimsulfuron ou ses sels ou ses éthers ou ses esters.

21. Suspension de sulfonylurées herbicides selon la revendication 16, **caractérisée en ce que** la sulfonylurée combinée au fluroxypyr est le nicosulfuron ou ses sels ou ses éthers ou ses esters.

22. Utilisation de la suspoémulsion produite selon la revendication 1 d'au moins une sulfonylurée et de fluroxypyr pour lutter, dans les cultures céréalières, contre les mauvaises herbes choisies dans le groupe constitué par :
*Gallium aparine, Rumex acetosa, Rumex crispus, Rumex obtusifolius, Kochia spp., Urdica dioica, Calystegia sepium, Convulvulus spp., Convulvulus arvensis, Solanum nigrum, Bilderkydia convolvulus, Cerastium arvense, Galeopsis tetrahit, Lamium amplexicaule, Malva sylvestris, Mysotis arventis, Parietaria spp., Sinapsis arvensis, Spergula arvensis, Stellaria media, Cytisus scoparius, Epilobium angustifolium, Ulex spp., Abutilum theophasti, Adonis spp., Agrostemma githago, Amaranthus spp., Arenaria spp., Bilderdykia convolvulus, Capsella bursa-pastoris, Chenopodium album, Datura stramonium, Diplotaxis erucoides, Lamium amplexicaule, Lithospermum arvense, Myosotis palustris, Papaver rhoeas, Polygonum aviculare, Portulaca oleracea, Raphanus raphanistrum, Silene spp., Sisymbrium orientalis, Veronica persica, Xantium spinosum, Adonis aestivalis, Anthemis arvensis, Buglossoides arvensi, Chamomilla recutita, Chenopodium album, Diplotaxis erucoides, Papaverrhoeas, Ridolphia saegetum, Salsola kali, Sisymbrium orientalis, Vaccaria segetum, Anagallis arvensis, Cirsium arvense, Fumaria officinalis, Hypecoum procumbens, Veronica bederifolia, Sorghum halepense, Avena sterilis, Echinochloa spp.* et specially *Echinochloa crus-galli, Lolium rigidum, Panicum miliaceum, Setaria verticillata ,Setaria viridis, Digitaria sanguinalis, Abutilon theophrasti, Amaranthus blitoides, Amaranthus retroflexus, Artemisia spp., Coronopus spp., Sorgum halepense, Diplotaxis spp., Eruca vesicaria, Helianthus annus, Portulaca oleracea, Reseda spp., Sonchus spp., Xanthium strumarium.*
